# EUROPEAN PATENT APPLICATION

(11) **EP 2 738 681 A1**
(43) Date of publication of application: **04.06.2014**
(21) Application number: 11870130.9
(22) Date of filing: 27.07.2011
(51) Int. Cl.: G06F 13/10

(54) **ELECTRONIC DEVICE, DEVICE ACCESS METHOD, AND PROGRAM**

(71) Applicant: Fujitsu Limited, Kawasaki-shi, Kanagawa 211-8588 (JP)
(72) Inventor: KATOU, Yousuke, Kawasaki-shi Kanagawa 211-8588 (JP)
(74) Representative: HOFFMANN EITLE
(86) International application number: PCT/JP2011/067172
(87) International publication number: WO 2013/014779

(57) **Abstract**

An electronic device includes a device connected to a bus controller, a memory that stores a program, and a processing unit that executes access to the device through the bus controller according to the program. The processing unit generates a prediction value of executing access to the device based on the result of executing access in the past in parallel with the access to the device, and executes, prior to completing access to the device, using the prediction value of the execution of the access to the device, post-processing of the access to the device using the result of executing access to the device when a number of times which the result of executing access in the past matches a prediction value of execution of access in the past reaches a specified number of times.

## Description

### FIELD

The present invention is related to an electronic device, a device access method, and a program for accessing a device.

### BACKGROUND

Recently, there is a computer system including a central processing unit (CPU) and memory which has been incorporated into an electronic device. Various devices included into such an electronic device are controlled so that they may perform specified operations by the CPU executing the program (firmware) stored in the memory of the computer system.

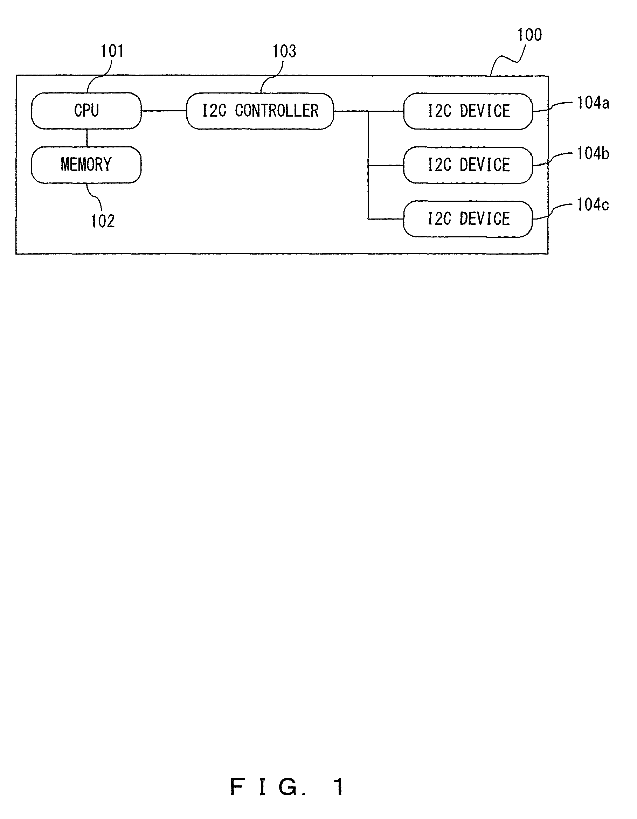

FIG. 1 is an example of a hardware configuration of an electronic device into which a computer system is incorporated. An electronic device 100 illustrated in FIG. 1 includes a CPU 101, memory 102, a I2C controller 103, and I2C devices 104a through 104c. The hardware included in the electronic device 100 may be implemented on one substrate.

FIG. 1 exemplifies the case in which the communication between the CPU 101 and the devices 104a through 104c is an inter-integrated circuit (I2C) communication. However, the communication between the CPU 101 and the devices 104a through 104c may be a communication in a master-slave system. That is, the communication may be in a system in which a device with which a slave device such as a I2C device etc. through a bus controller such as a I2C controller etc. can communicate, is limited to a master device such as a CPU etc.

An example of the I2C devices 104a through 104c illustrated in FIG. 1 may be a sensor such as a temperature sensor, a voltage sensor, etc., a storage element capable of performing high-speed access such as a register etc., non-volatile memory such as electrically erasable programmable read only memory (EEPROM) etc., a logical circuit such as large scale integrated circuit (LSI) etc. FIG. 1 exemplifies three I2C devices 104a through 104c, but the number of I2C devices which communicate with the CPU 101 may be an optional number.

The firmware which is executed by the CPU 101 and controls each of the devices 104a through 104c is stored in the memory 102. The access to each of the devices 104a through 104c by the CPU 101 which executes the firmware is performed by way of the I2C controller 103 through a driver stored in the memory 102.

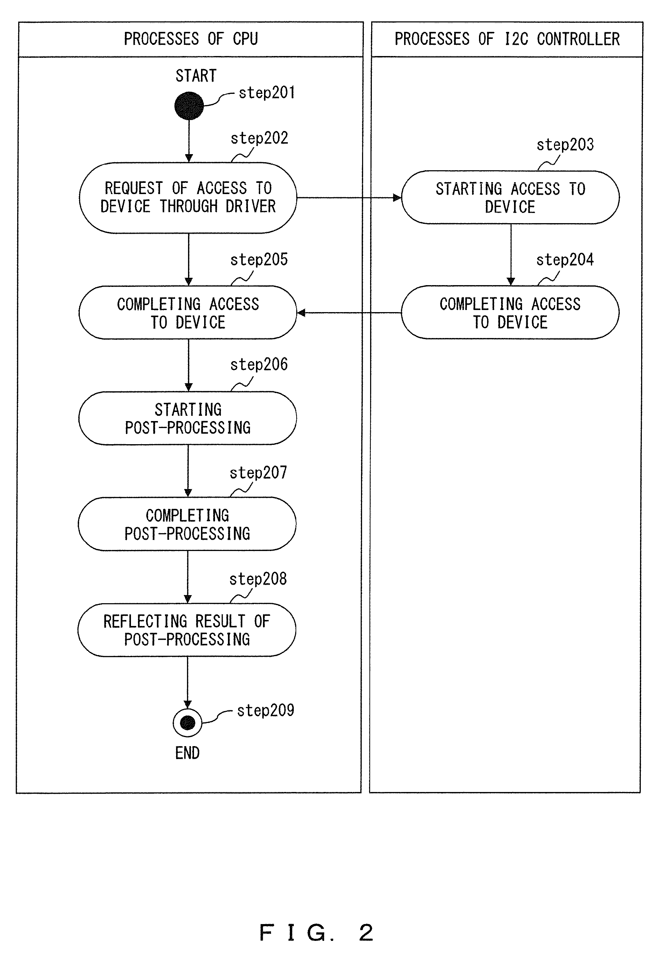

FIG. 2 is a flowchart of the conventional hardware access processing by the CPU which executes firmware.

The hardware access processing on the devices 104a through 104c executed by the CPU 101 includes the access to the devices 104a through 104c, the post-processing subsequent to the access to the devices 104a through 104c, and the post-processing on a file, memory, etc.

As illustrated in FIG. 2, when the hardware access processing on any of the devices 104a through 104c is started (step 201), the CPU 101 requests the I2C controller 103 through a driver to access the devices 104a through 104c (step 202). Upon receipt of the request, the I2C controller 103 accesses the devices 104a through 104c (steps 203 and 204).

When the access to the devices 104a through 104c is completed (step 205), the CPU 101 starts the post-processing of the device access subsequent to the completed access to the device (step 206).

The post-processing of the device access refers to the process by the CPU which executes the firmware using the result of executing access to the device such as a read value read from the device. For example, in a device resetting process, the post-processing refers to the processing performed by the CPU which changes a set value and collects necessary information depending on the value read from the device.

When the post-processing of the device access is completed (step 207), the CPU 101 reflects the result of executing post-processing on a file, memory, etc. (step 208). Then, the CPU 101 terminates the series of hardware access processing on any of the devices 104a through 104c (step 209).

As described above, in the conventional example of the flow of the hardware access processing by the CPU, it is necessary that while the I2C controller is accessing a device the CPU waits for the completion of the access to the device. Therefore, the CPU is not able to execute the program (firmware) about the post-processing when and after the access to the device is completed.

Additionally known is the technology of concurrently processing a predicted subsequent instruction using a plurality of hardware resources.

Furthermore known is the technology of predicting the environment information in advance of the current time using a plurality of hardware resources and generating in-shop equipment control information and announcement information based on a result of prediction.

Also known is the technology of obtaining a prediction value by pre-processing such as obtaining a ratio or difference between the time-series data to be predicted and the data immediately before, performing prediction using the pre-processed time-series data as a new prediction target, and performing an inverse transform as post-processing.

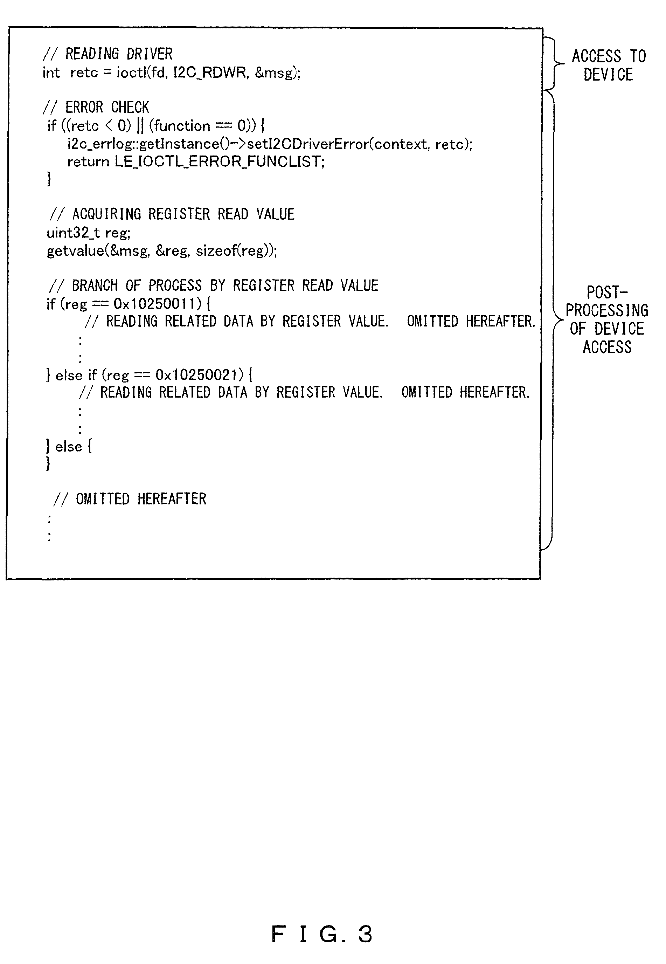

As described above with reference to FIG. 2, when the hardware access processing is performed on a device, the CPU is unable to execute a program about the post-processing on device access until a bus controller accesses the device and completes data transfer processing. That is, as in the example of the code of the application program illustrated in FIG. 3, the CPU is unable to execute the program about the post-processing on device access while the device is being accessed through a driver called by way of the operating system (OS).

### Documents of Prior Art

### Patent Documents

Patent Document 1: Japanese Laid-open Patent Publication No. 2002-91761
Patent Document 2: Japanese Laid-open Patent Publication No. 2006-190145
Patent Document 3: Japanese Laid-open Patent Publication No. 9-146915

### SUMMARY

The present invention aims at providing an electronic device, a device access method, and a program capable of reducing the execution time of hardware access processing on a device.

According to an aspect of the embodiments, an electronic device includes a device connected to a bus controller, a memory that stores a program, and a processing unit that executes access to the device through the bus controller according to the program. The processing unit generates a prediction value of executing access to the device based on the result of executing access in the past in parallel with the access to the device, and executes, prior to completing access to the device, using the prediction value of the execution of the access to the device, post-processing of the access to the device using the result of executing access to the device when a number of times which the result of executing access in the past matches a prediction value of execution of access in the past reaches a specified number of times.

### BRIEF DESCRIPTION OF DRAWINGS

FIG. 1 is an example of a hardware configuration of an element into which a computer system is incorporated;
FIG. 2 is a flowchart of the conventional hardware access processing by a CPU which executes firmware;
FIG. 3 is an example of an application program code which is unable to post-process of accessing until the access to a device is completed;
FIG. 4 is a flowchart of the hardware access processing by a CPU which executes firmware, according to an embodiment of the present invention;
FIG. 5 illustrates the comparison of processing time between the conventional hardware access processing and the hardware access processing according to an embodiment of the present invention;
FIG. 6 illustrates the configuration of the function of the CPU which executes the firmware according to an embodiment of the present invention;
FIG. 7 is an example of a value history table of the sensor type value prediction processing unit;
FIG. 8 is an example of a return value history table of the sensor type value prediction processing unit;
FIG. 9 is an example of a value history table of the storage element type value prediction processing unit;
FIG. 10 is an example of a return value history table of the storage element type value prediction processing unit;
FIG. 11 is an explanatory view of the specification of the value prediction processing unit which performs the value prediction processing for each type of device;
FIG. 12 is a flowchart of the value prediction processing performed by the value prediction processing unit for each type of device;
FIG. 13 is an explanatory view of the operation of the CPU in the value prediction phase when the device to be accessed is a sensor type device;
FIG. 14 is an explanatory view of the operation of the CPU in the value prediction phase when the device to be accessed is a storage element type device;
FIG. 15 is an explanatory view of the operation of the CPU in the information collection phase;
FIG. 16 is an example of a source code of the post-processing execution function before a value constant conversion;
FIG. 17 is an example of a source code of the post-processing execution function after a value constant conversion;
FIG. 18 is an explanatory view of the operation of the CPU in the speculative execution phase;
FIG. 19 illustrates the transition of the execution phase of the hardware access processing of the CPU which executes the firmware, according to an embodiment of the present invention;
FIG. 20A is a flowchart of the process from the start of accessing a device to the post-processing of device access by the CPU which executes the firmware, according to an embodiment of the present invention;
FIG. 20B is a flowchart of the process from the start of accessing a device to the post-processing of device access by the CPU which executes the firmware, according to an embodiment of the present invention;
FIG. 21 illustrates the class of the firmware according to an embodiment of the present invention;
FIG. 22 illustrates the mutual operation between the threads in the value prediction phase;
FIG. 23 illustrates the sequence of the process in the value prediction phase;
FIG. 24 illustrates the mutual operation between the threads in the information collection phase;
FIG. 25 illustrates the sequence of the process in the information collection phase;
FIG. 26 illustrates the mutual operation between the threads in the speculative execution phase; and
FIG. 27 illustrates the sequence of the process in the speculative execution phase.

### DESCRIPTION OF EMBODIMENTS

The embodiments of the present invention are described below in detail with reference to the attached drawings.

In the example of the configuration of the hardware of the electronic device illustrated in FIG. 1, the data transfer processing is performed by the I2C controller 103 when a device is accessed. Therefore, during the data transfer processing by the I2C controller 103, the I2C driver executed by the CPU 101 waits for an interruption, and the CPU 101 is hardly used.

The speculative execution program (firmware) according to the embodiment of the present invention effectively uses the free CPU resources while waiting for a reply from the device. That is, the CPU which executes the firmware according to the embodiment of the present invention speculatively executes the post-processing of device access using the free time in the standby state for the completion of the data transfer processing by the I2C controller during the access to the device.

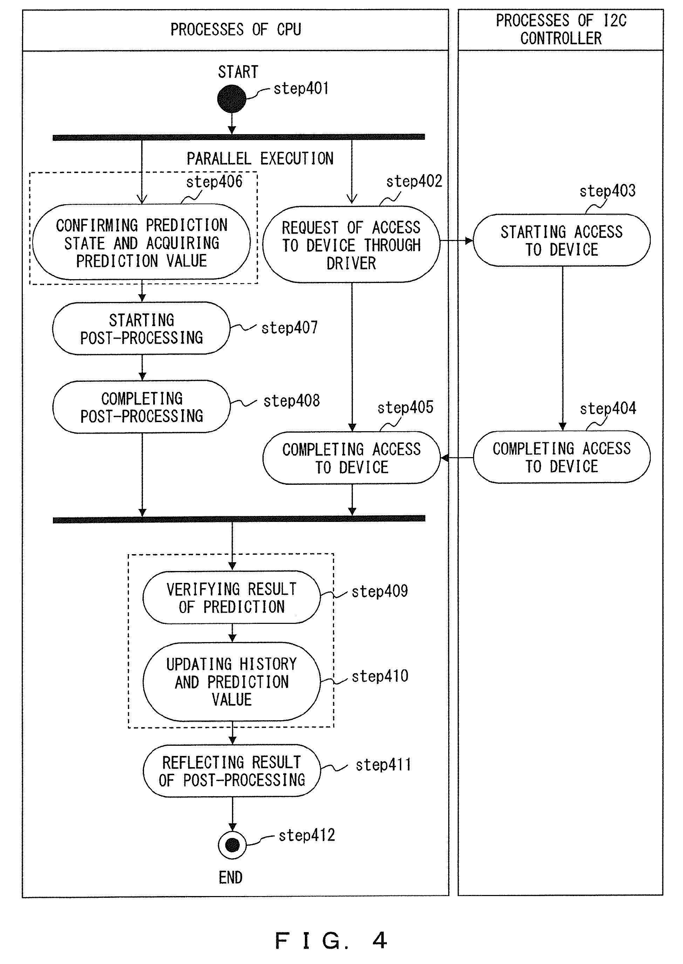

FIG. 4 is a flowchart of the hardware access processing by the CPU which executes the firmware, according to the embodiment of the present invention.

As illustrated in FIG. 4, when the hardware access processing on any of the devices 104a through 104c is started (step 401), the CPU 101 requests the I2C controller 103 through a driver to access the devices 104a through 104c (step 402). Upon receipt of the request, the I2C controller 103 accesses the devices 104a through 104c (steps 403 and 404), and the CPU 101 completes the access to the devices 104a through 104c (step 405).

In addition, the CPU 101 which executes the firmware according to the embodiment illustrated in FIG. 4 executes the post-processing (steps 206 and 207 in FIG. 2) to be executed after the CPU which executes the conventional firmware after completing the access to the device, concurrently with accessing the device (steps 402 through 405).

That is, when the hardware access processing is started on any of the devices 104a through 104c (step 401), the CPU 101 which executes the firmware according to the embodiment of the present invention confirms the prediction state and acquires a prediction value (step 406). That is, the CPU 101 confirms the prediction state as to whether or not the post-processing of the access to the device may be speculatively executed with high prediction accuracy, and acquires a prediction value concurrently with accessing the devices 104a through 104c.

When it is judged that the post-processing of the access of the device may be speculatively executed with high prediction accuracy as a result of confirming the prediction state in step 406, the CPU 101 which executes the firmware according to the embodiment of the present invention speculatively executes the post-processing of the access of the device based on the acquired prediction value (step 407).

When the access to the device is completed (step 405) and the speculatively executed post-processing of the access to the device is completed (step 408), the CPU 101 compares the prediction value acquired in step 406 with the value acquired by the access to the device, and verifies the result of the prediction of the prediction value (step 409).

Then, the CPU 101 which executes the firmware according to the embodiment of the present invention updates the history of the prediction value and the prediction state based on the result of verifying the result of the prediction (step 410). Furthermore, if the prediction has been successfully performed as a result of verifying the result of the prediction, the CPU 101 reflects the result of the post-processing speculatively executed using the prediction value on a file, memory, etc. (step 411). Then, a series of hardware access processing on any of the devices 104a through 104c is terminated (step 412).

As described above, to the hardware access processing by the CPU 101 which executes the firmware according to the embodiment of the present invention illustrated in FIG. 4, each process of the confirmation of the prediction state and the acquisition of a prediction value (step 406), the verification of the result of prediction (step 409), and the update of the history and the prediction value (step 410) is added. The CPU 101 which executes the firmware according to the embodiment of the present invention performs the post-processing of the access to the device concurrently with the access to the device in addition of the processing above.

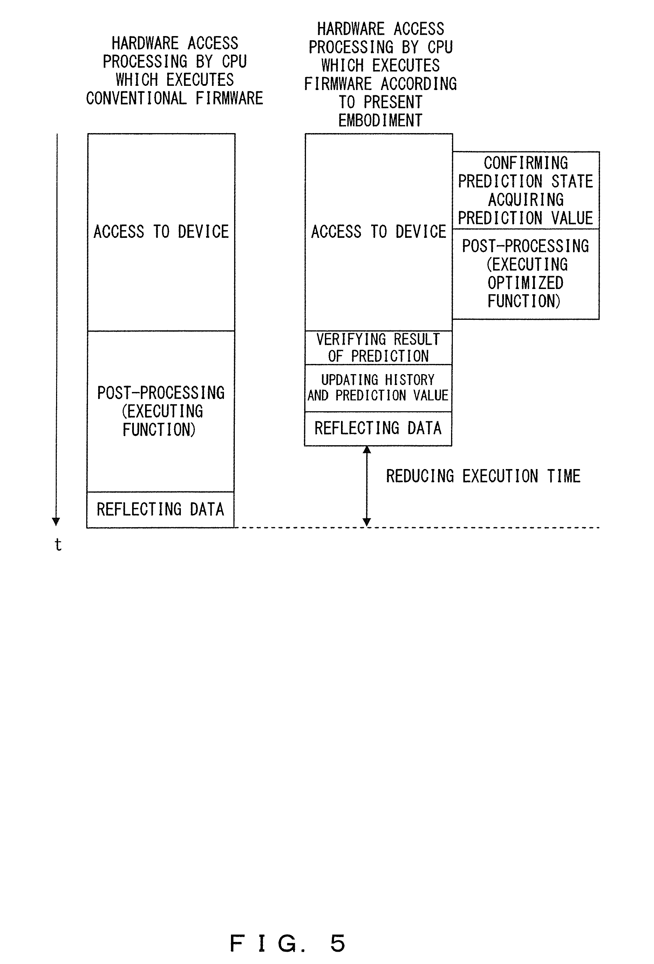

FIG. 5 illustrates the comparison of processing time between the conventional hardware access processing and the hardware access processing according to the embodiment of the present invention.

As illustrated in FIG. 5, the confirmation of the prediction state and the acquisition of the prediction value (step 406) in the above-mentioned additional processing are performed concurrently with the access to the device in the hardware access processing according to the embodiment of the present invention.

In the above-mentioned additional processing, the execution time taken for the verification of the result of prediction (step 409) and the update of the history and the prediction value (step 410) is shorter than the execution time taken for the post-processing in the conventional hardware access processing.

Therefore, as illustrated in FIG. 5, the CPU which executes the firmware according to the embodiment of the present invention may perform the hardware access processing by taking the processing time shorter than the time taken for the hardware access processing using the conventional firmware.

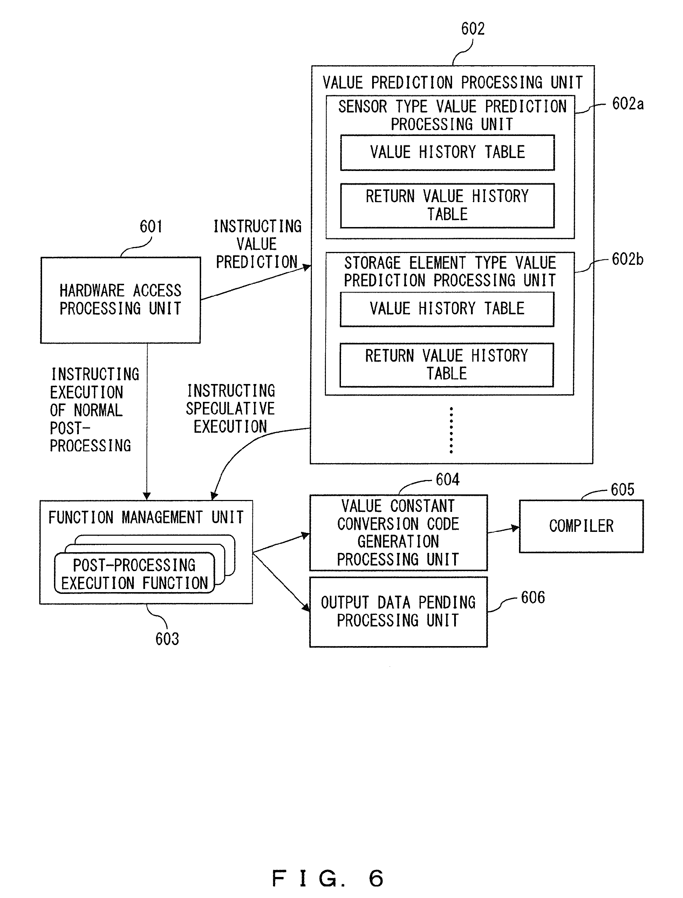

FIG. 6 illustrates the configuration of the function of the CPU which executes the firmware according to an embodiment of the present invention.

As illustrated in FIG. 6, the CPU 101 which executes the firmware according to the embodiment of the present invention includes a hardware access processing unit 601, a value prediction processing unit 602, a function management unit 603, a value constant conversion code generation processing unit 604, a compiler 605, and an output data pending processing unit 606.

The hardware access processing unit 601 performs the process for access a device. The access to the device includes reading data from the device, writing data to the device, and reading and writing data.

Reading and writing data refer to compositely performing a read of data from a device and a write of data to a device. An example of a read and a write of data may be the case in which it is necessary to specify the address on the ROM at which the data is to be read before reading data.

Furthermore, the hardware access processing unit 601 instructs the function management unit 603 to perform the post-processing of the device access. The hardware access processing unit 601 also instructs the function management unit 603 to speculatively perform the post-processing of the device access through the instruction to the value prediction processing unit 602 for predicting a value.

The value prediction processing unit 602 predicts a read value from a device, and a return value indicating whether or not the access to the device has been successfully performed. The value prediction processing unit 602 also manages the prediction accuracy of the predicted values.

The value prediction processing unit 602 performs prediction depending on the type of device to be accessed by the hardware access processing unit 601. Then, as a sensor type value prediction processing unit 602a and a storage element type value prediction processing unit 602b illustrated in FIG. 6, the value prediction processing unit 602 includes a value prediction processing unit for each type of device to be accessed by the hardware access processing unit 601.

Furthermore, the value prediction processing unit 602 predicts a result of executing access to a device using the history of a read value or a write value and the history of a return value obtained when the device is accessed in the past. The value prediction processing units 602a and 602b for each type of device include a value history table for holding a read value or a write value obtained in the past, and a return value history table for holding a return value obtained in the past.

The function management unit 603 manages post-processing execution functions 603a through 603c. The post-processing execution functions 603a through 603c are functions for performing the post-processing of device access.

In the embodiment of the present invention, the function for performing the post-processing of device access is separately converted from the conventional hardware access processing function for performing a series of hardware access processing, and the separately converted post-processing execution functions 603a through 603c are managed by the function management unit 603.

The library for the post-processing execution functions 603a through 603c is dynamically loaded, and the internal handle to the dynamic library is held by the function management unit 603.

According to the embodiment of the present invention, the post-processing execution functions 603a through 603c include three types of functions, that is, a normal executing function, an information processing function, and an optimized function.

The normal executing function is a post-processing execution function used when the post-processing of device access is performed based on the result of executing access to a device.

The information processing function is a post-processing execution function used for collecting necessary information for generating an optimized post-processing execution function.

The optimized function is a post-processing execution function optimized to be used when the post-processing of device access is speculatively performed.

The function management unit 603 selects a post-processing execution function from the three types of post-processing execution functions 603a through 603c depending on the execution phase of the hardware access processing, and executes the selected post-processing execution function.

The value constant conversion code generation processing unit 604 and the compiler 605 optimizes a post-processing execution function used to perform a speculative execution. That is, when the accuracy of predicting a value on a result of executing access to a device is high, the value constant conversion code generation processing unit 604 generates a source code of a post-processing execution function obtained as a constant converted from a prediction value. The compiler 605 compiles a source code of a post-processing execution function obtained as a constant converted from a prediction value for optimization with a profile option.

The output data pending processing unit 606 temporarily stores output data as a result of execution when the optimized execution function is speculatively executed. When the prediction is right as a result of verifying the result of prediction, the output data pending processing unit 606 reflects the state of the stored output data on the memory, a file, etc.

On the other hand, when the prediction is wrong as a result of verifying the result of prediction, the output data pending processing unit 606 discards the temporarily stored output data. In this case, using the read value practically read by accessing the device, the function management unit 603 executes the post-processing execution function (normal executing function) of the device access.

By the above-mentioned process of the output data pending processing unit 606, it becomes unnecessary to perform the recovery processing when it is judged that the prediction of a value fails. That is, when the prediction of a value fails it becomes unnecessary to perform the process of restoring the memory and file rewritten using the output data of the speculatively executed post-processing execution function to the state before the rewrite to reflect the result of execution of the post-processing of device access using the read value by the access to the device on the memory and the file.

The configuration of the function of the value prediction processing unit 602 illustrated in FIG. 6 is further explained below.

To perform the speculative execution of the post-processing of device access, it is necessary to predict the result of executing access to a device by the hardware access processing unit 601.

The access pattern to a device depends on the device, but there is a characteristic access pattern for each device. Then, the value prediction processing unit 602 predicts a result of executing access to the device by the prediction policy based on the access pattern to the device.

When a sensor, a register, EEPROM, and LSI are exemplified as the type of device, the prediction policy for predicting the result of executing access to the device may be explained as follows.

A sensor such as a temperature sensor, a voltage sensor, etc. returns a measured value obtained by the sensor as a result of executing access. Therefore, as the prediction policy of the sensor, it may be mentioned that there is a high possibility that the data last read by the access is read as is at the next access, or the data according to a specified pattern is read from the result of executing access in the past. Then, on the sensor, a final value prediction or a context prediction in which a prediction value is managed for each address of the device is performed.

The final value prediction refers to the prediction of a value in which a result of operation of an instruction etc. is equal to the value obtained in the previous execution. The context prediction refers to the prediction of a value in which a result of an operation of an instruction etc. is repeated in accordance with a certain pattern such as 0, 1, 1, 0, 1, 1, 0, 1, 1.

The register is a storage element capable of executing high-speed access, and may read the value written to the register by write access from the register by read access. Therefore, as a prediction policy of a register value, it may be mentioned that there is a high possibility that the data written to the register by write access is read as is by read access. On the register, the final value prediction for managing the history of a prediction value is performed for each device address of the register.

In the EEPROM as non-volatile memory, data is written and read at the specified address of the EEPROM. Therefore, as a prediction policy of the EEPROM, it is mentioned that there is a high possibility that the data written by write access is read as is by read access. Accordingly, on the EEPROM, the final value prediction for managing the history of a prediction value is performed for each device address of the EEPROM and write address.

The LSI as a logical circuit returns a read value of a specified pattern during the subsequent read access. Therefore, as a prediction policy of the LSI, it may be mentioned that there is a high possibility that a value of a specified pattern is read according to the data last written by write access during the read access. Then, on the LSI, the final value prediction for managing the history of a prediction value is performed for each device address of the LSI and written data.

Thus, the prediction policy of predicting a result of executing access to a device may be considered for each device. However, a common point may be detected among the prediction policies for a device. Then, by considering the common point of the prediction policies, value prediction processing may be performed based on, for example, the following sensor type value prediction processing and storage element type value prediction.

The sensor type value prediction is to predict a read value from a device such as a temperature sensor, a voltage sensor, etc., and a system of predicting that a specified value will be read from a device.

For the sensor type value prediction, the above-mentioned final value prediction or the context prediction may be used. For example, in the sensor type value prediction using the final value prediction, the final read value is stored in the history table for each device address, and the final read value stored in the history table is used as a prediction value during the execution of the next hardware access processing.

The storage element type value prediction is to predict a read value from a storage element type device such as a register, EEPROM, etc., and a system for predicting that the final write value to the device will be red from the device.

For the storage element type value prediction, the above-mentioned final value prediction may be used. In the storage element type value prediction, the final write value is stored in the history table for each device address, and the final write value stored in the history table is used as a prediction value during the execution of read access.

As an example of the value prediction processing unit for each type of device, the sensor type value prediction processing unit 602a and the storage element type value prediction processing unit 602b illustrated in FIG. 6 are described below. They are exemplified only, and a value prediction processing unit for each type of other devices may be added in the value prediction processing unit 602 depending on the type of device to be accessed.

The sensor type value prediction processing unit 602a illustrated in FIG. 6 predicts a value for a device to be accessed by the hardware access processing unit 601 according to, for example, the sensor type value prediction using the above-mentioned final value prediction.

The sensor type value prediction processing unit 602a includes a value history table and a return value history table.

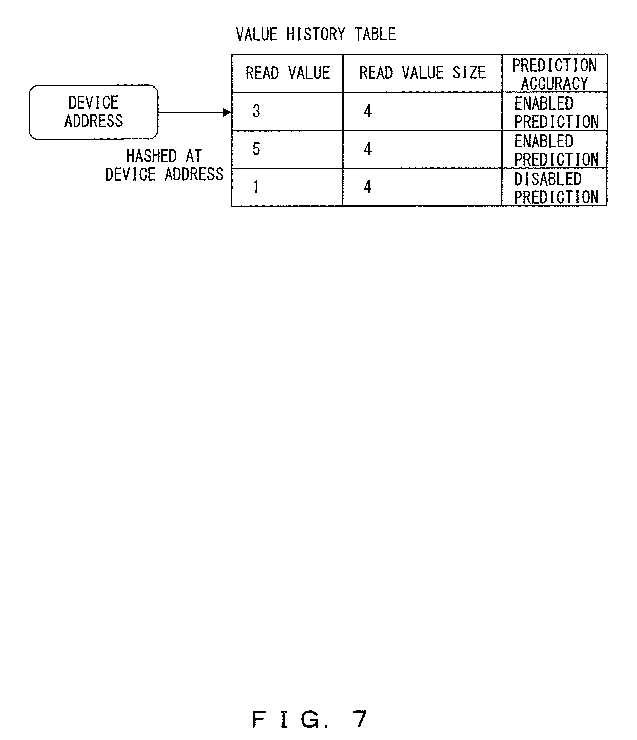

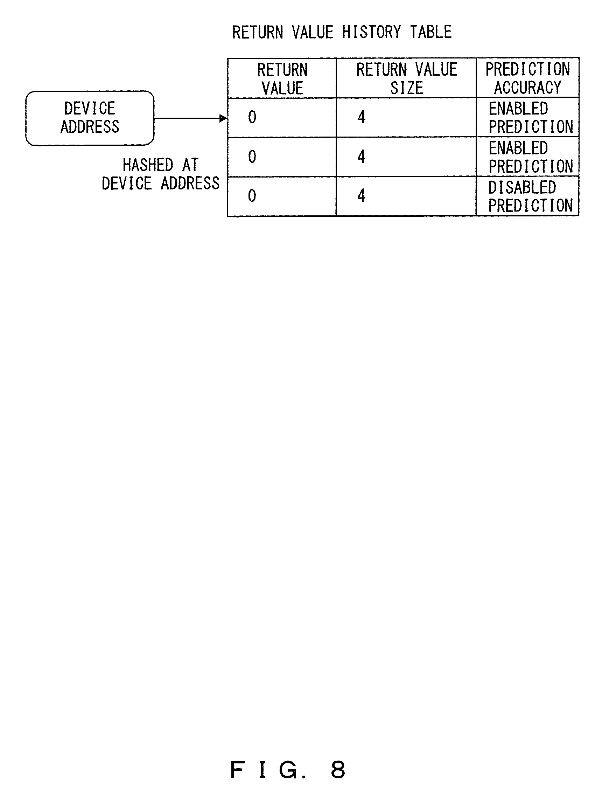

FIG. 7 is an example of a value history table of the sensor type value prediction processing unit. FIG. 8 is an example of a return value history table of the sensor type value prediction processing unit.

As illustrated in FIG. 7, the value history table is, for example, a hash table in which, a hash value is generated using the address of a device as a key, and a read value, a read value size, and prediction accuracy are held as the values corresponding to the key.

The read value held in the value history table is data read during the access to a device. The read value size held in the value history table is a data size of the read value. The prediction accuracy held in the value history table indicates the state as to whether or not a value may be predicted using a read value, and whether or not the speculative execution may be performed using a read value.

The read value, the read value size, and the prediction accuracy held in the value history table are updated when the access to a device is completed.

The type of the prediction accuracy held in the value history table may be disabled prediction, enabled prediction, and enabled speculative execution.

The disabled value prediction indicates the state in which a value is not predicted using a read value stored in the value history table. The enabled value prediction indicates the state in which a value is predicted using a read value stored in the value history table. The enabled speculative execution indicates the state in which speculative execution may be performed based on the prediction of a value.

For example, when the prediction accuracy searched from the value history table based on a device address is the enabled prediction or the enabled speculative execution, the sensor type value prediction processing unit 602a processes as a prediction value the corresponding read value stored in the value history table.

As illustrated in FIG. 8, the return value history table is, for example, a hash table in which a hash value is generated using the address of a device as a key, and a return value, a return value size, and prediction accuracy are held as the values corresponding to the key.

The return value held in the return value history table is data indicating whether or not the access to a device has successfully been performed, and what error has occurred when the access to a device has failed. The return value size held in the return value history table is a data size of the return value. The prediction accuracy held in the return value history table indicates the state as to whether or not a value may be predicted using a return value, and whether or not the speculative execution may be performed using a return value.

The return value, the return value size, and the prediction accuracy held in the return value history table are updated when the access to a device is completed.

The type of the prediction accuracy held in the return value history table may be disabled prediction, enabled prediction, and enabled speculative execution.

For example, when the prediction accuracy searched from the return value history table based on a device address is the enabled prediction or the enabled speculative execution, the sensor type value prediction processing unit 602a processes as a prediction value the corresponding return value stored in the return value history table.

The storage element type value prediction processing unit 602b illustrated in FIG. 6 predicts a access execution result value for a device to be accessed by the hardware access processing unit 601 according to, for example, the above-mentioned storage element type value prediction.

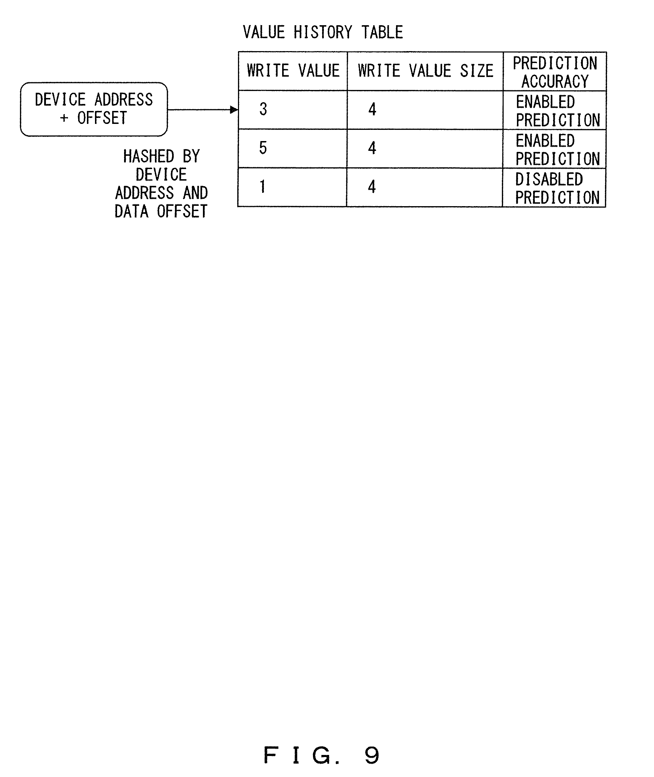

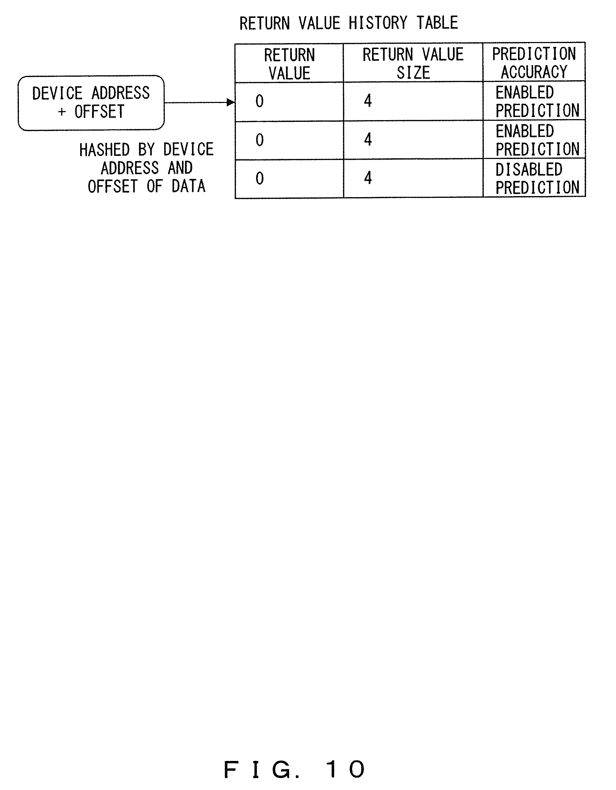

The storage element type value prediction processing unit 602b includes a value history table and a return value history table. FIG. 9 is an example of a value history table of the storage element type value prediction processing unit. FIG. 10 is an example of a return value history table of the storage element type value prediction processing unit.

As illustrated in FIG. 9, the value history table is, for example, a hash table in which, a hash value is generated using the address of a device and a data offset as keys, and a read value, a read value size, and prediction accuracy are held as the values corresponding to the keys.

The write value held in the value history table illustrated in FIG. 9 is data written during the access to a device. The write value size held in the value history table is a data size of the write value. The prediction accuracy held in the value history table indicates the state as to whether or not a value may be predicted using a write value, and whether or not speculative execution may be performed using a write value. The type of the prediction accuracy may be disabled prediction, enabled prediction, and enabled speculative execution.

The write value and the write value size held in the value history table are updated when the write access is completed. In addition, the prediction accuracy held in the value history table is updated when the read access is completed.

As illustrated in FIG. 10, the return value history table is, for example, a hash table in which, a hash value is generated using the address of a device and a data offset as keys, and a return value, a return value size, and prediction accuracy are held as the values corresponding to the keys.

The contents of each of the return value, the return value size, and the prediction accuracy held in the return value history table illustrated in FIG. 10 are the same as the contents of the return value history table of the sensor type value prediction processing unit illustrated in FIG.8.

The specification of the value prediction processing units 602a and 602b which predict a value for each type of device is performed when the hardware access processing unit 601 instructs the prediction of a value.

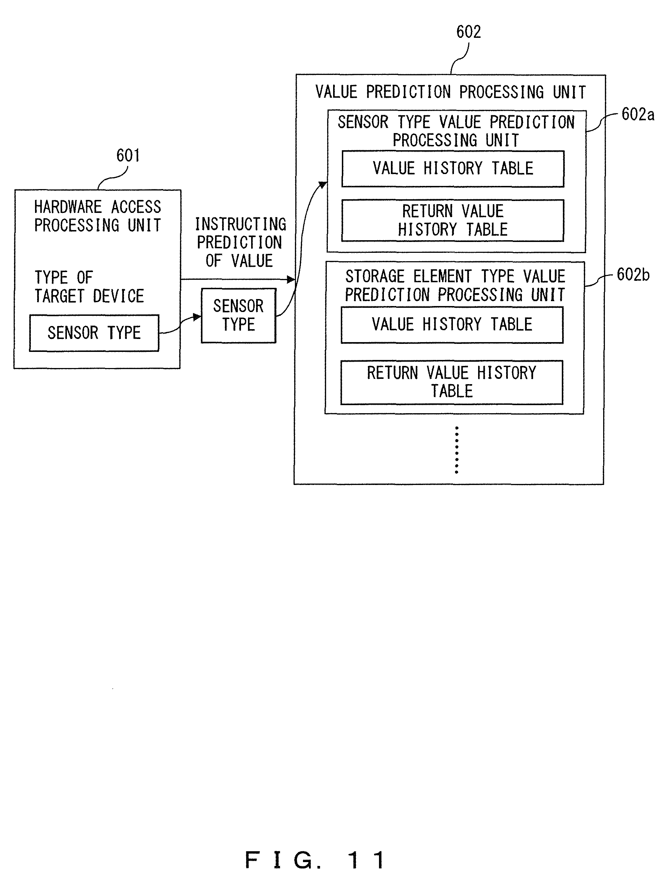

For example, when the access target of the hardware access processing unit 601 is a sensor type device, the hardware access processing unit 601 specifies the sensor type value prediction processing unit 601a when the prediction of a value is instructed as the example illustrated in FIG. 11. Then, the specified sensor type value prediction processing unit 601a performs the prediction.

The value prediction processing units 602a and 602b for each type of device may also add an entry depending on the type of device to be accessed by the hardware access processing unit 601.

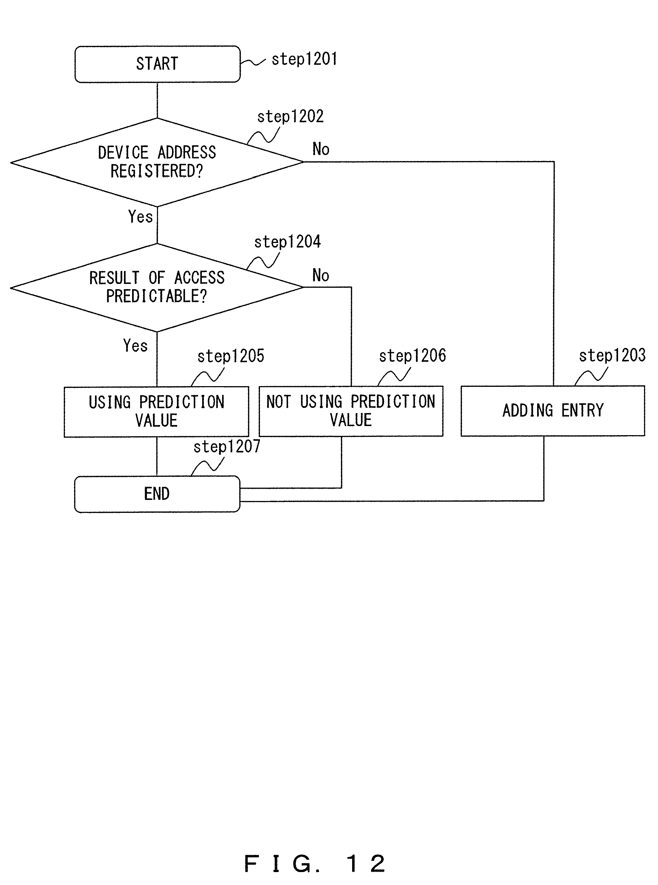

FIG. 12 is a flowchart of the value prediction processing performed by the value prediction processing unit for each type of device.

When the value prediction processing is started by the value prediction instruction by the hardware access processing unit 601 (step 1201), it is judged whether or not the address of the device to be accessed by the hardware access processing unit 601 is registered in the value prediction history table and the return value history table (step 1202).

When the address of the device is not registered as a result of the judgment in step 1202, an entry having the address of the device as a key id added to the value prediction history table and the return value history table (step 1203), and a series of the value prediction processing is terminated (step 1207).

When the address of the device is registered as a result of the judgment in step 1202, it is judged whether or not the prediction of the result of executing access to the device may be performed with reference to the corresponding prediction accuracy stored in the value prediction history table and the return value history table (step 1204).

If the prediction may be performed as a result of the judgment in step1204, the corresponding read value or write value and return value stored in the value prediction history table and the return value history table are used as prediction values (step 1205). Then, after the completion of the process in step 1205, a series of value prediction processing is terminated (step 1207).

If the prediction is not performed as a result of the judgment in step1204, the corresponding read value or write value and return value stored in the value prediction history table and the return value history table are not used as prediction values (step 1206). Then, after the completion of the process in step 1206, a series of value prediction processing is terminated (step 1207).

In the embodiment of the present invention, the CPU 101 having the configuration of the function illustrated in FIG. 6 predicts a result of executing access to a device, and speculatively executes the code which may be originally executed only after the completion of the access to the device.

Described below is the process performed each time a device is accessed by the CPU 101 which executes the firmware according to the embodiment for speculatively executing the post-processing of the device access based on the prediction of a value.

The process performed by the CPU 101 each time a device is accessed includes three execution phases, that is, a value prediction phase, an information collection phase, and a speculative execution phase depending on the prediction accuracy on the read value read by the access.

In the value prediction phase, during the read/write access, a read value and a return value which are read by accessing a device are predicted.

Ad described above, the value prediction processing unit 602 performs the value prediction processing for each type of device to be accessed.

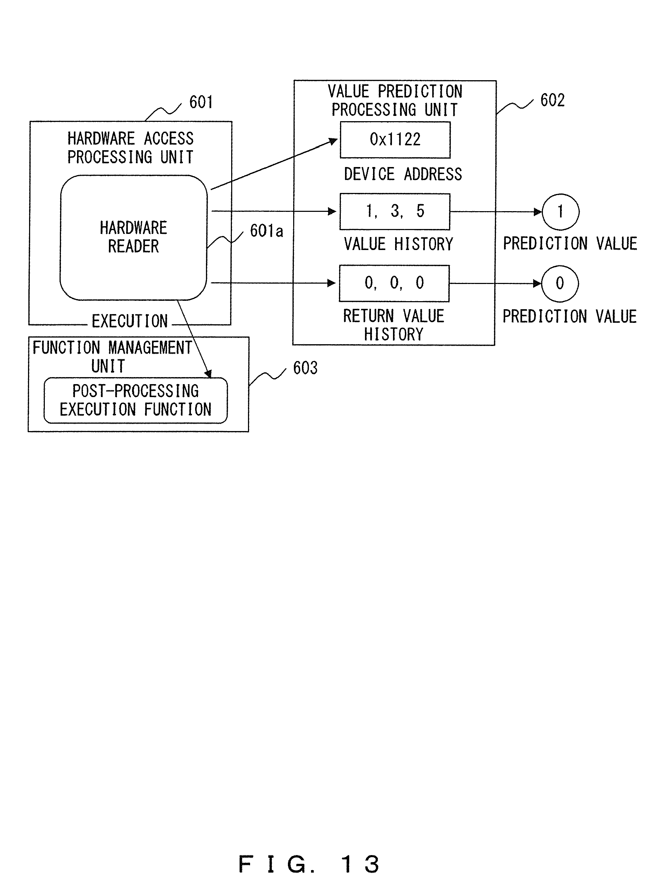

FIG. 13 is an explanatory view of the operation of the CPU in the value prediction phase when the device to be accessed is a sensor type device.

As illustrated in FIG. 13, the class named a hardware reader 601a included in the hardware access processing unit 601 is used in the read access to a device.

The read value read from the device and the return value as a result of the access to the device by the hardware reader 601a are stored respectively in the value history table and the return value history table in the value prediction processing unit 602 hashed at the device address.

In the value prediction phase, the value prediction processing unit 602 predicts a value of the result of executing access to the device concurrently with the access to the device by the hardware reader 601a.

Upon receipt of the instructions of the prediction of a value from the hardware reader 601a, the value prediction processing unit 602 generates and acquires a prediction value corresponding to the result of executing access to the device based on the read value and the return value of the device to be accessed which are respectively stored in the value history table and the return value history table. For example, in the case of the final value prediction, the value prediction processing unit 602 acquires as prediction values the read value and the return value stored for each address of a device.

The value prediction processing unit 602 compares the acquired prediction values with the read value and the return value read by the access to the device, and judges whether or not the compared values match and the prediction is right.

As illustrated in FIG. 13, further in the value prediction phase, the function management unit 603 executes the post-processing execution function using the result of executing access to the device according to the instruction of the hardware reader 601a, and performs the post-processing of device access.

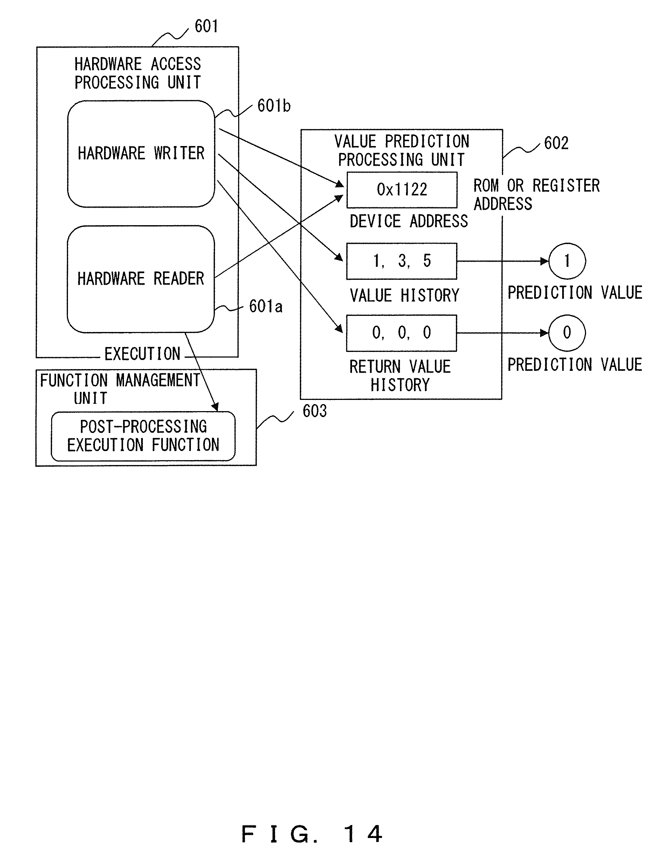

FIG. 14 is an explanatory view of the operation of the CPU in the value prediction phase when the device to be accessed is a storage element type device.

As illustrated in FIG. 14, the class named a hardware writer 601b included in the hardware access processing unit 601 is used in the write access to a device.

The write value written to the device and the return value as a result of the access to the device by the hardware writer 601b are stored respectively in the value history table and the return value history table in the value prediction processing unit 602 hashed at the device address.

As illustrated in FIG. 14, the class named a hardware reader 601a included in the hardware access processing unit 601 is used in the read access to a device.

In the value prediction phase, the value prediction processing unit 602 predicts a value of the result of executing access to the device concurrently with the access to the device by the hardware reader 601a.

Upon receipt of the instruction of the prediction of a value from the hardware reader 601a, the value prediction processing unit 602 generates and acquires a prediction value corresponding to the result of executing access to the device based on the write value and the return value of the device to be accessed which are respectively stored in the value history table and the return value history table. For example, in the case of the final value prediction, the value prediction processing unit 602 acquires as prediction values the write value and the return value stored for each address of a device.

The value prediction processing unit 602 compares the acquired prediction values with the read value and the return value read by the access to the device, and judges whether or not the compared values match and the prediction is right.

As illustrated in FIG. 14, further in the value prediction phase, the function management unit 603 executes the post-processing execution function using the result of executing access to the device according to the instruction of the hardware reader 601a, and performs the post-processing of device access.

Unlike the example described above with reference to FIGS. 13 and 14, the value prediction processing unit 602 may predict a value first using the most effective value prediction policy for the type of device to be accessed to attempt the optimum prediction, and predict a value next using another value prediction policy when high prediction accuracy is not acquired by the above-mentioned value prediction policy.

When prediction accuracy has been acquired at a high level to some extent in the value prediction phase, the phase is transferred to the information collection phase.

In the information collection phase, the information is collected to optimize the post-processing execution function of device access.

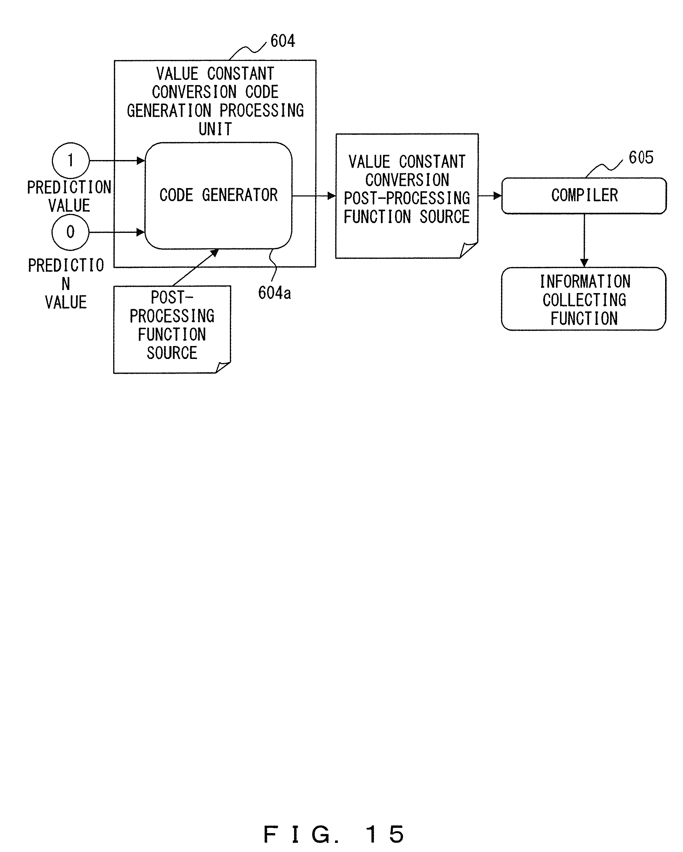

FIG. 15 is an explanatory view of the operation of the CPU in the information collection phase.

As illustrated in FIG. 15, the value is converted into a constant for the source code of the post-processing execution function by the class called a code generator 604a included in the value constant conversion code generation processing unit 604.

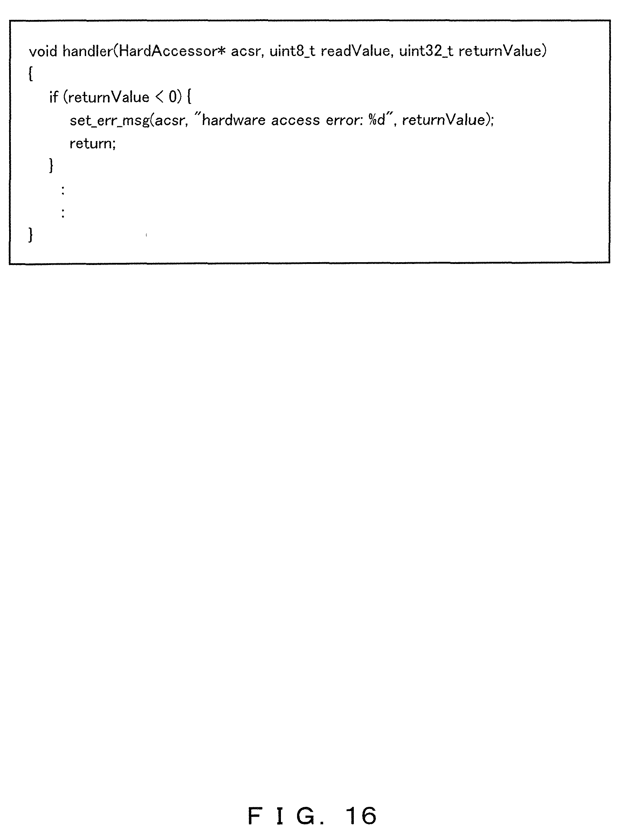

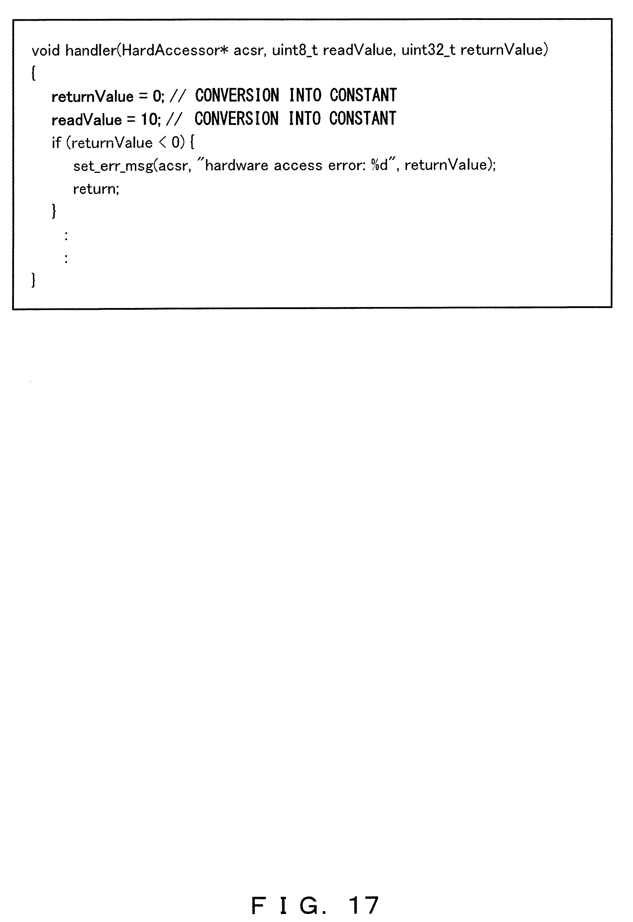

The conversion of a value into a constant refers to converting an argument of the post-processing execution function as illustrated in FIG. 16 based on the prediction value as illustrated in FIG. 17.

The source code of the post-processing execution function converted as a constant by the code generator 604a is compiled by the compiler 605 for optimization with a profile option. The compiled post-processing execution function is dynamically loaded as an information processing function for optimizing the post-processing execution function of device access.

The information collecting function is executed by the function management unit 602 each time a device is accessed after the transfer to the information collection phase. Then, based on the result of the profiling of the executed information collecting function, the conversion of a source code of the post-processing execution function into a constant by the value constant conversion code generation processing unit 604, and the compilation by the compiler 605 are performed again.

When the information collection is completed by executing the information collecting function a specified number of times, the phase is transferred to the speculative execution phase. In the speculative execution phase, the post-processing of device access is speculatively executed based on the prediction value.

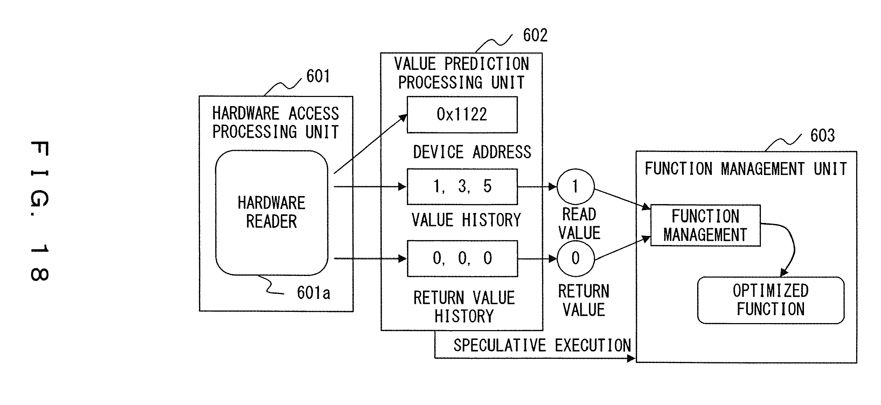

FIG. 18 is an explanatory view of the operation of the CPU in the speculative execution phase.

As illustrated in FIG. 18, the value prediction processing unit 602 predicts the values of the read value and the return value of the device to be accessed according to the instruction to predict a value from the hardware reader 601a.

The function management unit 603 acquires the optimized function in the information collection phase based on the prediction value generated and acquired by the prediction of a value. Then, the function management unit 603 speculatively executes the acquired optimized function.

Thus, in the speculative execution phase, the optimized function optimized using the result of profiling and the prediction value is loaded. Therefore, according to the CPU which executes the firmware according to an embodiment of the present invention, the speculative execution of the post-processing of device access may be performed at a high-speed.

The result of execution obtained by performing the speculative execution by the function management unit 603 is temporarily stored by the output data pending processing unit 606. When the access to the device by the hardware reader 601a is completed, the value prediction processing unit 602 compares the result of executing access to the device with the prediction value.

As a result of the comparison, when it is judged that the values match and the prediction is right, the hardware access processing unit 601 determines the contents of the post-processing of device access based on the result of execution obtained by the speculative execution, and reflects the determined contents on the memory, the files, etc.

On the other hand, if the values do not match, and it is judged that the prediction is wrong, then the output data pending processing unit 606 discards the temporarily stored result of the execution which has been acquired by the speculative execution. Then, the hardware access processing unit 601 instructs the function management unit 603 to normally perform the post-processing of device access using the result of executing access to the device. The hardware access processing unit 601 reflects the result of the normal execution of the post-processing of device access by the function management unit 603 on the memory, the files, etc.

Thus, according to the embodiment of the present invention, when a value is successfully predicted on the result of executing access to a device, the post-processing of device access may be executed concurrently with the access to a device. Therefore, the execution time of the hardware access processing may be reduced.

Furthermore, according to the embodiment of the present invention, the CPU resources in the state of waiting for a reply from the device during the access to the device may be effectively used by speculatively executing the post-processing of device access.

Then, according to the embodiment of the present invention, since the result of the speculative execution of the post-processing of device access is reflected on the memory, the files, etc. after verifying the result of the prediction, it is unnecessary to perform the recovery processing when the prediction of a value fails, thereby reducing the overhead.

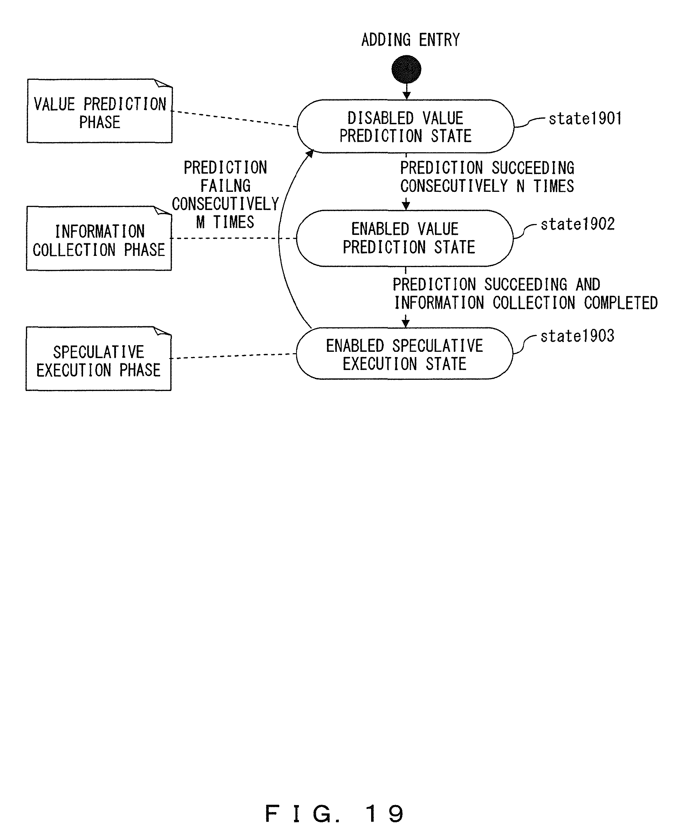

FIG. 19 illustrates the transition of the execution phase of the hardware access processing of the CPU which executes the firmware according to an embodiment of the present invention.

When the hardware access processing unit 601 first accesses the device, there is no entry registered for the device in the value history table and the return value history table in the value prediction processing unit 602. Therefore, the value prediction processing unit 602 adds an entry having the address of the device as a key to the value history table and the return value history table. In this case, the CPU 101 which executes the firmware according to the embodiment of the present invention is in a disabled value prediction state 1901.

Then, in the value prediction phase, the prediction of a value by the value prediction processing unit 602 and the normal execution of the post-processing of device access by the function management unit 603 are performed each time the hardware access processing unit 601 accesses a device.

In the value prediction phase, if the prediction of a value on the result of executing access to a device are successfully performed the specified N times, the prediction accuracy stored in the value history table and the return value history table in the value prediction processing unit 602 is changed from disabled prediction to enabled prediction. Furthermore, the value constant conversion code generation processing unit 604 converts the value of the source code of the post-processing execution function into a constant, and the source code of the post-processing execution function which has been converted into a constant is compiled by the compiler 605 for optimization with a profile option. The compiled post-processing execution function is dynamically loaded as an information processing function for optimizing the post-processing execution function of device access. Then, the CPU 101 which executes the firmware according to the embodiment of the present invention transfers from the disabled value prediction state 1901 to an enabled value prediction state 1902.

Then, in the information collection phase, the prediction of a value by the value prediction processing unit 602 and the collection of information by the execution of the information collecting function by the function management unit 603 are performed each time the hardware access processing unit 601 accesses a device.

In the information collection phase, if the prediction of a value on the result of executing access to a device are successfully performed the specified N times and the collection of information is completed, the prediction accuracy stored in the value history table and the return value history table in the value prediction processing unit 602 is changed from enabled prediction to enabled speculative execution. Furthermore, the value constant conversion code generation processing unit 604 converts the value of the source code of the post-processing execution function into a constant, and the compiler 605 compiles the source code of the post-processing execution function which has been converted into a constant again based on the result of the collection of information, thereby the optimized post-processing execution function is generated. Then, the CPU 101 which executes the firmware according to the embodiment of the present invention transfers from the enabled value prediction state 1902 to an enabled speculative execution state 1903.

Then, in the speculative execution phase, the prediction of a value by the value prediction processing unit 602 and the speculative execution of the post-processing of device access by the function management unit 603 are performed each time the hardware access processing unit 601 accesses a device.

In the information collection phase, if the prediction of a value on the result of executing access to a device are successfully performed the specified N times, and the information collection is completed, then the prediction accuracy stored in the value history table and the return value history table in the value prediction processing unit 602 is changed from enabled prediction to enabled speculative execution. Furthermore, the conversion of a value of the source code of the post-processing execution function by the compiler 605 and the compilation of the source code of the post-processing execution function whose value has been converted into a constant by the compiler 605 are performed again based on the result of collecting information, thereby generating the optimum post-processing execution function. Then, the CPU 101 which executes the firmware according to the embodiment of the present invention transfers from the enabled value prediction state 1902 to an enabled speculative execution state 1903.

Then, in the value prediction phase, the prediction of a value by the value prediction processing unit 602 and the normal execution of the post-processing of device access by the function management unit 603 are performed each time the hardware access processing unit 601 accesses a device.

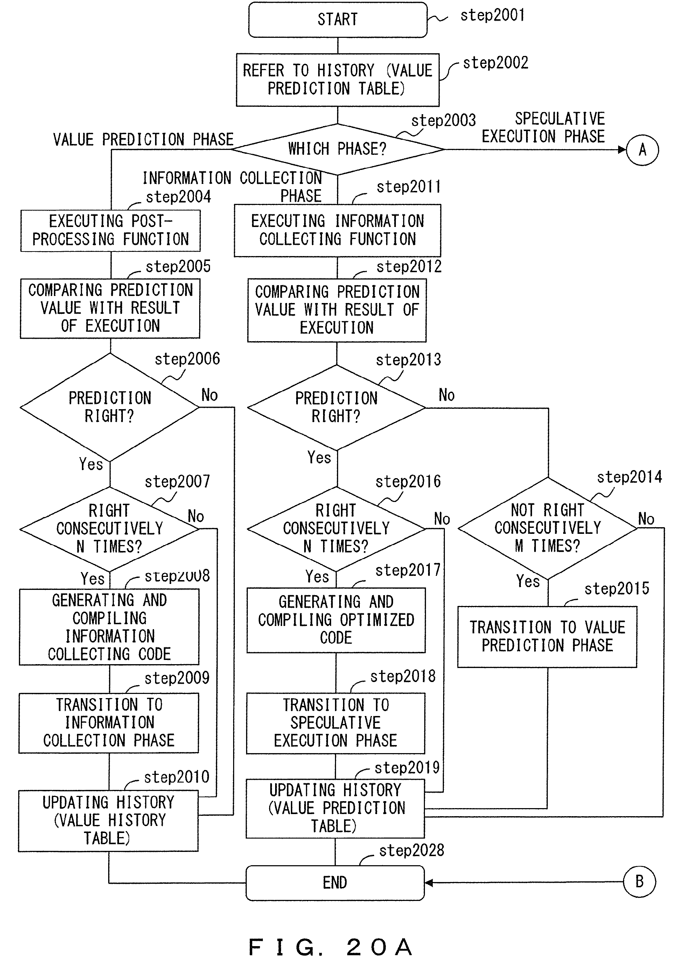

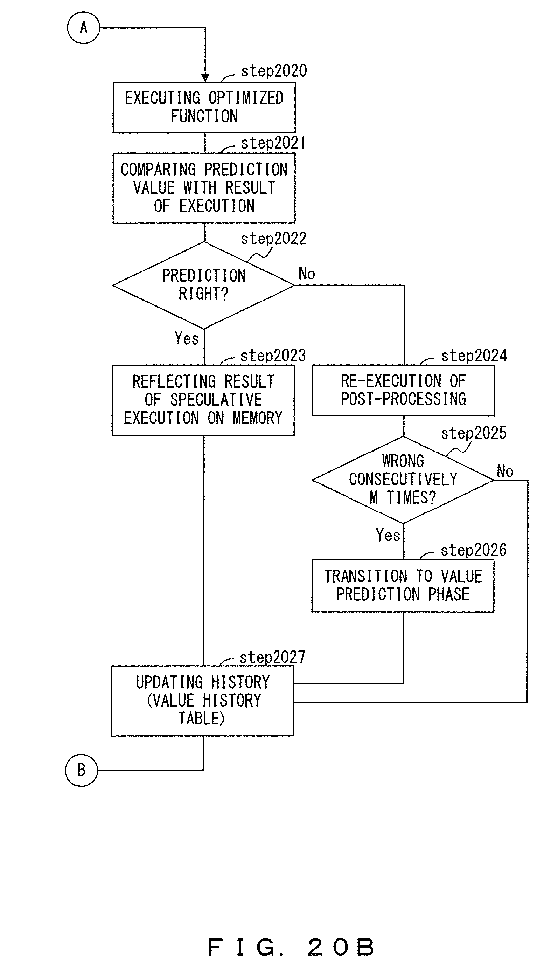

FIG. 20 is a flowchart of the process after the start of accessing a device to the post-processing of device access by the CPU which executes the firmware according to an embodiment of the present invention.

The hardware access processing unit 601 starts accessing a device, it instructs the value prediction processing unit 602 to predict a read value from the device to be accessed and a return value (step 2001).

Upon receipt of the instruction of the prediction of a value, the value prediction processing unit 602 refers to the value history table and the return value history table of the device to be accessed (step 2002). Then, the value prediction processing unit 602 judges in which execution phase among the value prediction phase, the information collection phase, and the speculative execution phase the hardware access processing for the device to be accessed is operating with reference to the prediction accuracy in the value history table and the return value history table (step 2003).

First, in step 2003, if the prediction accuracy in the value history table and the return value history table refers to disabled prediction, the value prediction processing unit 602 judges that the hardware access processing on the device to be accessed is in the value prediction phase, and control is passed to step 2004.

In step 2004, after the access to the device is executed by the hardware access processing unit 601, the function management unit 603 performs the post-processing of the device access using the result of executing access to the device and the normal executing function. Then, the hardware access processing unit 601 reflects the result of the execution of the post-processing of device access on the memory, the files, etc.

In step 2005, the value prediction processing unit 602 compares the prediction value generated and acquired based on the read value or the write value in the value history table and the return value in the return value history table with the result of executing access to the device by the hardware access processing unit 601. Then, the value prediction processing unit 602 judges as a result of the comparison whether or not the prediction on the result of executing access to the device is right (step 2006).

In step 2006, if the values do not match and it is judged that the prediction is not right, the value prediction processing unit 602 updates the value history table and the return value history table based on the result of executing access to the device (step 2010). Then, a series of hardware access processing is terminated (step 2028).

On the other hand, if it is judged in step 2006 that the values match and the prediction is right, then the value prediction processing unit 602 judges whether or not the prediction has been right the specified N times consecutively (step 2007).

If it is judged in step 2007 that the prediction has been right the specified N times consecutively, then the value prediction processing unit 602 updates the value history table and the return value history table based on the result of executing access to the device (step 2010). Then, a series of hardware access processing is terminated (step 2028).

On the other hand, if it is judged in step 2007 that the prediction has been right the specified N times consecutively, then the value constant conversion code generation processing unit 604 generates a source code of the post-processing execution function with an embedded prediction value (step 2008). Furthermore, the compiler 605 compiles the source code of the post-processing execution function generated by the value constant conversion code generation processing unit 604 for optimization with a profile option.

The code of the post-processing execution function compiled by the compiler 605 in step 2008is dynamically loaded as an information collecting function, and is used when the post-processing of device access is executed after the transfer to the information collection phase (step 2009).

The value prediction processing unit 602 updates the value history table and the return value history table based on the result of executing access to the device (step 2010). By the update, the prediction accuracy in the value history table and the return value history table is changed from disabled prediction to enabled prediction. Then, a series of hardware access processing is terminated (step 2028).

Next, when the prediction accuracy in the value history table and the return value history table is enabled prediction in step 2003, the value prediction processing unit 602 judges that the hardware access processing on the device to be accessed is in the information collection phase, and control is passed to step 2011.

In step 2011, after the hardware access processing unit 601 accesses a device, the function management unit 603 performs the post-processing of device access using a dynamically loaded information collecting function. By executing the information collecting function, various types of information such as branch information is collected, and the profiling of a information processing code is performed.

In step 2012, the value prediction processing unit 602 compares the prediction value generated and acquired based on the read value or the write value in the value history table and the return value in the return value history table, with the result of executing access to the device by he hardware access processing unit 601. Then, the value prediction processing unit 602 judges as a result of the comparison whether or not the prediction on the result of executing access to the device has been right (step 2013).

If it is judged in step 2013 that the values do not match and the prediction is wrong, the value prediction processing unit 602 judges whether or not the prediction has been wrong consecutively the specified M times (step 2014).

If it is judged in step 2014 that the prediction is not wrong consecutively the specified M times, the value prediction processing unit 602 updates the value history table and the return value history table based on the result of executing access to the device (step 2019). Then, a series of hardware access processing is terminated (step 2028).

On the other hand, if it is judged in step 2014 that the prediction is wrong consecutively the specified M times, the current phase is to be transferred to the value prediction phase in the next process of accessing the device to predict a value (step 2015).

Then, the value prediction processing unit 602 updates the value history table and the return value history table based on the result of executing access to the device (step 2019). By the update, the prediction accuracy in the value history table and the return value history table is changed from enabled prediction to disabled prediction. Then, a series of hardware access processing is terminated (step 2028).

If it is judged in step 2013 that the values match and the prediction is right, the value prediction processing unit 602 judges whether or not the prediction has been right consecutively the specified N times (step 2016).

If it is judged in step 2016 the prediction is not right consecutively the specified N times, the value prediction processing unit 602 updates the value history table and the return value history table based on the result of executing access to the device (step 2019). Then, a series of hardware access processing is terminated (step 2028).

On the other hand, if it is judged in step 2016 the prediction is right consecutively the specified N times, then the value may be predicted with high prediction accuracy. Therefore, it may be mentioned that the post-processing of device access is speculatively executed based on the prediction of a value. Accordingly, the value constant conversion code generation processing unit 604 generates a source code of the post-processing execution function with an embedded prediction value (step 2017). Furthermore, based on the result of the profiling, the compiler 605 compiles the source code of the post-processing execution function generated by the value constant conversion code generation processing unit 604.

The code of the post-processing execution function compiled by the compiler 605 in step 2017 is loaded as an optimized function, and is used during the execution of the post-processing of device access after the current phase is transferred to the speculative execution phase (step 2018).

The value prediction processing unit 602 updates the value history table and the return value history table based on the result of executing access to a device (step 2019). By the update, the prediction accuracy in the value history table and the return value history table is changed from enabled prediction to enabled speculative execution. Then, a series of hardware access processing is terminated (step 2028).

If the prediction accuracy in the value history table and the return value history table refers to enabled speculative execution in step 2003, the value prediction processing unit 602 judges that the hardware access processing on the device to be accessed is in the speculative execution phase, and control is passed to step 2020.

In step 2020, the value prediction processing unit 602 generates and acquires a prediction value based on the read value or the write value in the value history table and the return value in the return value history table. The function management unit 603 acquires the dynamically loaded optimized function based on the prediction value acquired by the value prediction processing unit 602, and speculatively executes the post-processing of device access using the acquired optimized function. The output data pending processing unit 606 holds the result of speculative execution by the function management unit 603.

After the execution of the access to the device by the hardware access processing unit 601, the value prediction processing unit 602 compares the prediction value with the result of executing access to the device (step 2021). Then, the value prediction processing unit 602 judges as a result of the comparison whether or not the prediction on the result of executing access to the device is right (step 2022).

If it is judged in step 2022 that the values match and the prediction is right, the result of the speculative execution held by the output data pending processing unit 606 is reflected on the memory, the files, etc. (step 2023). In addition, the value prediction processing unit 602 updates the value history table and the return value history table based on the result of executing access to the device (step 2027). Then, a series of hardware access processing is terminated (step 2028).

On the other hand, if it is judged in step 2022 that the values do not match and the prediction is wrong, the output data pending processing unit 606 discards the held result of the speculative execution. The function management unit 603 again performs the post-processing of device access using the result of executing access to the device and the normal executing function (step 2024).

Then, the value prediction processing unit 602 judges whether or not the prediction has been wrong consecutively the specified M times (step 2025).

If it is judged in step 2025 that the prediction has not been wrong consecutively the specified M times, then the value prediction processing unit 602 updates the value history table and the return value history table based on the result of executing access to the device (step 2019). Then, a series of hardware access processing is terminated (step 2028).

If it is judged in step 2025 that the prediction has been wrong consecutively the specified M times, then it is necessary that the current phase is transferred to the value prediction phase in the next hardware access processing, and the prediction of a value is executed (step 2015).

Then, the value prediction processing unit 602 updates the value history table and the return value history table based on the result of executing access to the device (step 2019). By the update, the prediction accuracy in the value history table and the return value history table is changed from enabled speculative execution to disabled prediction. Then, a series of hardware access processing is terminated (step 2028).

An example of the firmware according to the embodiment of the present invention is further described in detail.

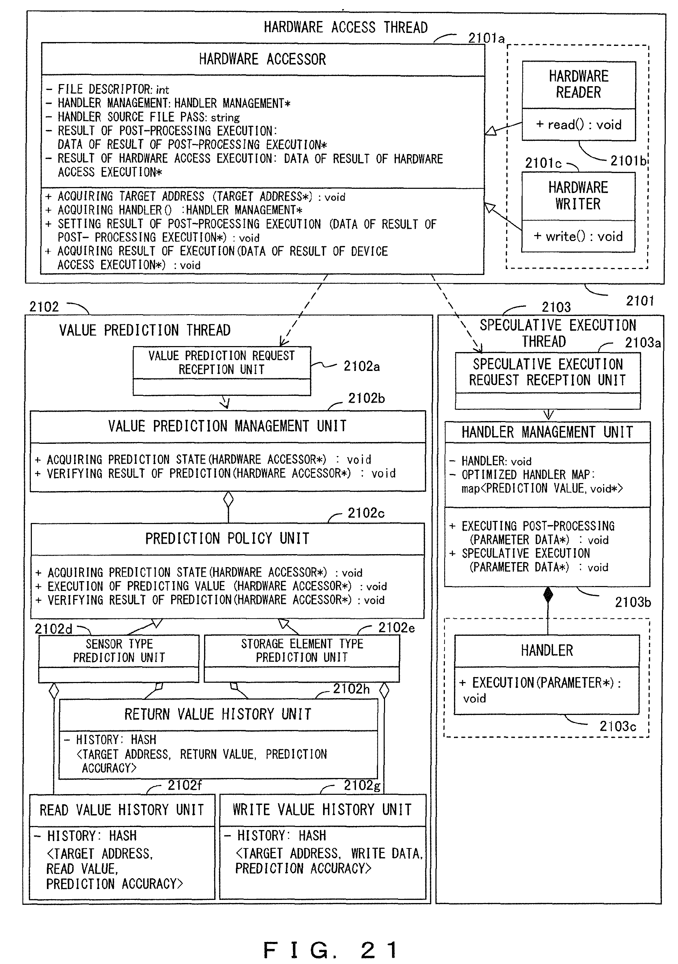

FIG. 21 illustrates the class of the firmware according to an embodiment of the present invention.

The firmware illustrated in FIG. 21 is executed by the CPU 101.

As illustrated in FIG. 21, the thread of the firmware according to the embodiment of the present invention includes a hardware access thread 2101, a value prediction thread 2102, and a speculative execution thread 2103.

The hardware access thread 2101 is a thread for accessing a device to be accessed. The value prediction thread 2102 is a thread for performing the prediction of a value on the result of executing access to a device. The speculative execution thread 2103 is a thread for speculatively executing the post-processing of device access.

The value prediction thread 2102 and the speculative execution thread 2103 may be increased in multiplicity depending on the hardware which executes the firmware.

As illustrated in FIG. 21, the hardware access thread 2101 includes as classes a hardware accessor 2101a, a hardware reader 2101b, and a hardware writer 2101c.

The hardware accessor 2101a is the class for accessing a device.

As illustrated in FIG. 21, the hardware accessor 2101a includes as attributes a file descriptor, a handler management, a handler source file pass, a result of executing post-processing, and a result of executing hardware access.

The file descriptor is used in calling a driver during the access to a device. The file descriptor is an int type, and the visibility is private.

The handler management is a pointer variable to an instance of a handler management unit 2103b. The handler management is held for issuing an instruction to execute post-processing of device access in the value prediction phase. The visibility of handler management is private.

A handler source file pass is a file pass of a source code of a handler for performing post-processing of device access. The handler source file pass is used during the generation of a optimum code and the compilation. The handler source file pass is a string type, and the visibility is private.

The result of executing post-processing is a pointer variable for holding the result of executing post-processing of device access. The visibility of the result of executing post-processing is private.

The result of executing device access is a pointer variable for holding a result of executing device access. The visibility of the result of executing device access is private.

As illustrated in FIG. 21, the hardware accessor 2101a includes as methods acquisition of a target address, acquisition of a handler, a setting a result of executing post-processing, and acquisition of a result of execution.

The acquisition of a target address is a method of acquiring an address of a device to be accessed. The argument of acquisition of a target address is a target address, and a return value is void. The visibility of acquisition of a target address is public.

The acquisition of a handler is a method of acquiring a pointer to an instance of the handler management unit 2103b. The argument of acquisition of a handler is void, and the return value is handler management as a pointer variable. The visibility of acquisition of a handler is public.

The setting a result of executing post-processing is a method of setting a result of executing post-processing of device access. The argument of a setting a result of executing post-processing is the data of a result of executing post-processing as a pointer variable, and a return value is void. The visibility of the setting a result of executing post-processing is public.

The acquisition of a result of execution is a method of acquiring a result of executing access to a device. The argument of the acquisition of a result of execution is the data of the result of executing device access as a pointer variable, and the return value is void. The visibility of the acquisition of a result of execution is public.

The hardware reader 2101b and the hardware writer 2101c are sub-classes of the hardware accessor 2101a which has inherited the hardware accessor 2101a.

The hardware reader 2101b and the hardware writer 2101c are generated by a user who uses a hardware accessing module according to the embodiment of the present invention.

The hardware reader 2101b includes a read as a method.

The read is a method of performing a reading process from a device. The argument and the return value of the read are void. The visibility of the read is public.

The hardware writer 2101c includes a write as a method.

The argument and the return value of the write are void. The visibility of the write is public.

As illustrated in FIG. 21, the value prediction thread 2102 includes as classes a value prediction request reception unit 2102a, a value prediction management unit 2102b, a prediction policy unit 2102c, a sensor type prediction unit 2102d, a storage element type prediction unit 2102e, a read value history unit 2102f, a write value history unit 2102g, and a return value history unit 2102h.

The value prediction request reception unit 2102a is a class for receiving a request to the value prediction thread. As illustrated in FIG. 21, there is a dependency between the value prediction request reception unit 2102a and the hardware accessor 2101a.

The value prediction management unit 2102b is a class for managing a value prediction mechanism. As illustrated in FIG. 21, there is a dependency between hardware reader 2101b and the value prediction request reception unit 2102a.

As illustrated in FIG. 21, the value prediction management unit 2102b includes, as methods, acquisition of a prediction state and verification of a result of prediction.

The acquisition of a prediction state is a method of acquiring prediction accuracy. The argument of the acquisition of a prediction state is a hardware accessor as a pointer variable, and the return value is void. The visibility of the acquisition of a prediction state is public. In the speculative execution phase, the acquisition of a prediction state instructs the speculative execution to the speculative execution thread.

The verification of a result of prediction is a method of comparing and verifying the acquired result of execution by accessing a device with a prediction value on the result of executing access to the device. The argument of the verification of a result of prediction is a hardware accessor as a pointer variable, and the return value is void. The visibility of the verification of a result of prediction is public.

The prediction policy unit 2102c is a part of the value prediction management unit 2102b, and as illustrated in FIG. 21, there is the aggregational correlation between the prediction strategy unit 2102C and the value prediction management unit 2102b.

The prediction strategy unit 2102c is an abstraction class for performing the prediction strategy based on the prediction policy for each type of device to be accessed.

As illustrated in FIG. 21, the prediction policy unit 2102c includes, as method, acquisition of a prediction state, execution of predicting a value, and verification of a result of prediction.

The acquisition of a prediction state is a method of acquiring prediction accuracy.

The execution of predicting a value is a method of predicting a value. The argument of the execution of predicting a value is a hardware accessor as a pointer variable, and the return value is void. The visibility of the execution of predicting a value is public.

The verification of a result of prediction is a method of comparing and verifying the acquired result of execution by accessing a device with a prediction value on the result of executing access to the device. The prediction accuracy of the value history table and the return value history table is updated based on the result of verification of the verification of a result of prediction.

The sensor type prediction unit 2102d and the storage element type prediction unit 2102e are sub-classes of the prediction policy unit 2102c as illustrated in FIG. 21.

The sensor type prediction unit 2102d and the storage element type prediction unit 2102e are classes for performing an individual predicting process based on the prediction policy for each type of device to be accessed.

That is, the sensor type prediction unit 2102d implements a predicting process for a sensor type. The storage element type prediction unit 2102e implements a predicting process for a storage element type.

The read value history unit 2102f is a sub-class of the sensor type prediction unit 2102d with the return value history unit 2102h. The write value history unit 2102g is a sub-class of the storage element type prediction unit 2102e with the return value history unit 2102h.

The read value history unit 2102f is a class for holding the history of the read value read from the device by the access.

The read value history unit 2102f includes a history as an attribute. The history is hashed at the target address as a device address to be accessed, and holds the read value and prediction accuracy. The visibility of the history is private.

The write value history unit 2102g is a class for holding the history of the write value written to the device by the access.

The write value history unit 2102g holds a history as an attribute. The history is hashed at the target address as a device address to be accessed, and holds the write data and prediction accuracy. The visibility of the history is private.

The return value history unit 2102h is a class for holding the return value for the access to the device. The return value history unit 2102h includes a history as an attribute. The history holds a return value and prediction accuracy, and the visibility of the history is private.

As illustrated in FIG. 21, the speculative execution thread 2103 includes, as classes, a speculative execution request reception unit 2103a, a handler management unit 2103b, and a handler 2103c.

The speculative execution request reception unit 2103a is a class for receiving a request to the speculative execution thread. As illustrated in FIG. 21, there is the dependency between the speculative execution request reception unit 2103a and the hardware accessor 2101a.

The handler management unit 2103b is a class for managing a handler which performs the post-processing of device access. As illustrated in FIG. 21, there is the dependency between the handler management unit 2103b and the speculative execution request reception unit 2103a.

As illustrated in FIG. 21, the handler management unit 2103b includes a handler and an optimized handler map as attributes.

The handler is a pointer variable used in calling a handler which performs the post-processing of device access, and the visibility of it is private.

The optimized handler map is an attribute for holding a optimized or information collecting handler, and the visibility of it is private. The optimized handler map holds a prediction value and a corresponding handler as a pointer variable.

As illustrated in FIG. 21, the handler management unit 2103b includes execution of post-processing and speculative execution as methods.

The execution of post-processing is a method of performing post-processing of device access using a result of executing access to a device. The argument of the execution of post-processing is parameter data as a result of executing access to the device, and the return value is void. The visibility of the execution of post-processing is public.

The speculative execution is a method for performing speculative execution of the post-processing of device access. The argument of the speculative execution is parameter data as a prediction value for the result of executing access to a device, and the return value is void. The visibility of the speculative execution is public.

The handler 2103c is a post-processing execution function of device access. As illustrated in FIG. 21, there is the composition correlation between the handler 2103c and the handler management unit 2103b.

The handler 2103c is generated by a user who uses a hardware accessing module according to the embodiment of the present invention.

The handler 2103c includes the execution as a method. The execution performs the post-processing of device access. The argument of the execution is parameter data as the result of executing access to a device or its prediction value, and the return value is void. The visibility of the execution is public.

Described next is the sequence of the process by the firmware illustrated in FIG. 21.

The sequence of the process described below is an example only, and may include a process to be not always performed in a time series and a process to be performed concurrently or individually. Each of the class names listed below refers to an instance of a class unless otherwise specified.

First described below is the sequence of the process in the value prediction phase.

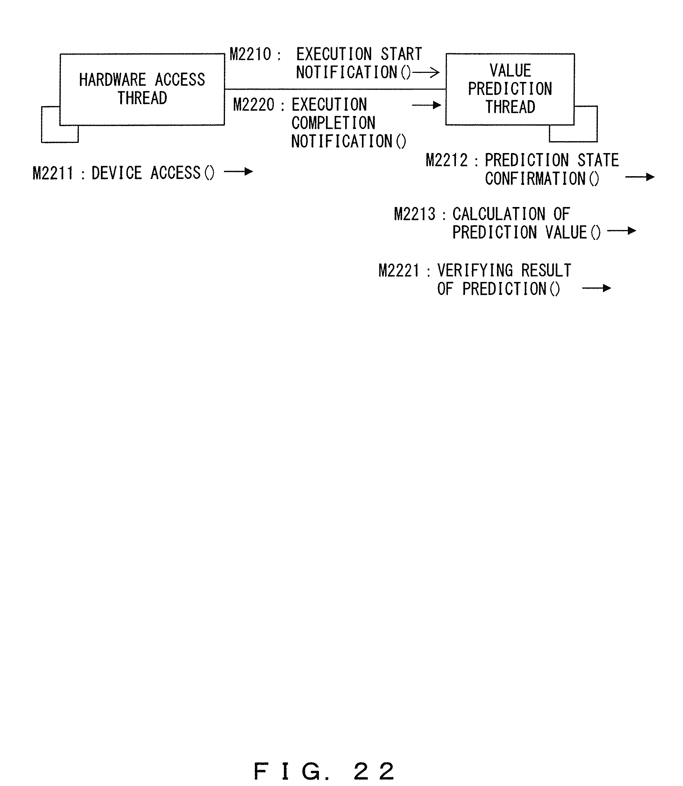

FIG. 22 illustrates the mutual operations between the threads in the value prediction phase.

In the value prediction phase, the hardware access thread 2101 and the value prediction thread 2102 work cooperatively.

As illustrated in FIG. 22, the driver of the device to be accessed in the hardware access thread 2101 is activated by way of the OS, and accesses the device (M2211).

In the value prediction phase, the prediction of a value is performed in the value prediction thread 2102 concurrently with the access to the device in the hardware access thread 2101.

That is, the hardware access thread 2101 notifies the value prediction thread 2102 of the start of the access execution to the device prior to the start of the access to the device (M2210) . Then, in the value prediction thread 2102, the execution of predicting a value on the result of executing access to the device is started.

In the value prediction thread 2102, the confirmation (M2212) of the prediction state as to whether or not a value may be predicted on the result of executing access to the device, and the calculation of prediction value (M2213) are performed.

When the access to the device in a hardware access thread 2110 is completed, the notification of the completion of the access execution is transmitted from the hardware access thread 2101 to the value prediction thread 2102 (M2220).

In the value prediction thread 2102, the prediction value is compared with the value read by the access to the device, and the verification of the result of the prediction as to whether or not the prediction is right (M2221).

After the verification of the result of the prediction in the value prediction thread 2102 is performed, the post-processing of the device access is performed in the hardware access thread 2101.

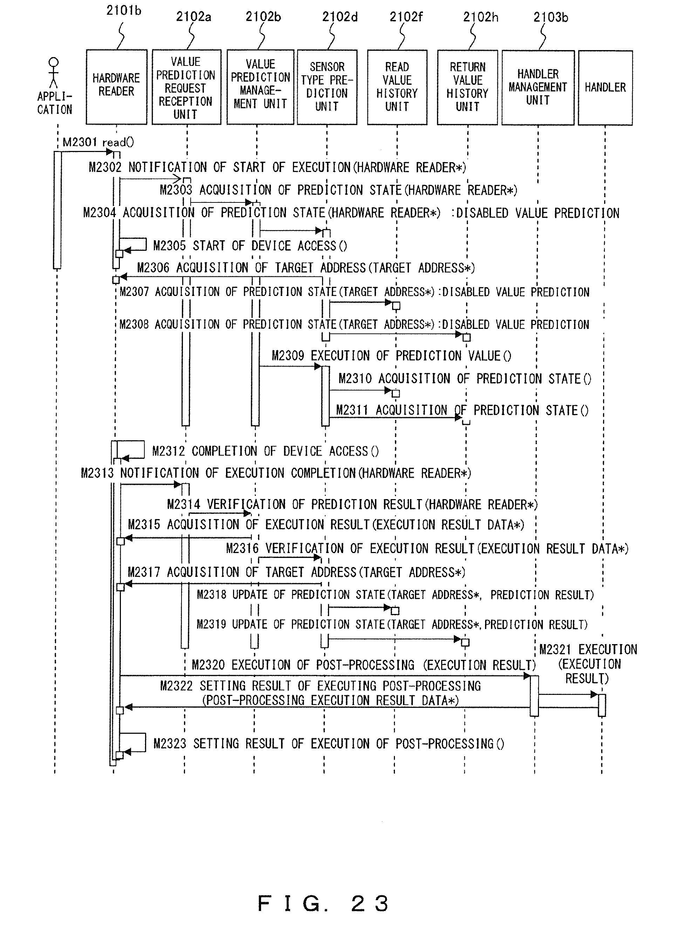

FIG. 23 illustrates the sequence of the process in the value prediction phase. FIG. 23 illustrates an example of the hardware access processing on the device of sensor type.

First, upon receipt of a request to access a device (M2301), the hardware reader 2101b notifies the value prediction request reception unit 2102a of the start of the access to the device (M2302).

The value prediction request reception unit 2102a requests the value prediction management unit 2102b to acquire the prediction accuracy (M2303). Upon receipt of the request, the value prediction management unit 2102b requests the sensor type prediction unit 2102d to acquire the prediction accuracy (M2304).

Furthermore, the hardware reader 2101b starts accessing a device (M2305).

The hardware reader 2101b enters an inactive state after starting the access to the device as illustrated by the existence line of the hardware reader 2101b illustrated in FIG. 23. In the embodiment, while the hardware reader 2101b enters the inactive state after starting the access to the device, the prediction of a value on the result of executing access to the device is performed in the value prediction thread.

Upon receipt of the request to acquire the prediction accuracy, the sensor type prediction unit 2102d acquires the target address as an address of the device to be accessed from the hardware reader 2101b (M2306).

The sensor type prediction unit 2102d acquires the prediction accuracy hashed at the target address from the read value history unit 2102f (M2307). Furthermore, the sensor type prediction unit 2102d acquires the prediction accuracy hashed at the target address from the return value history unit 2102h (M2308). In the example illustrated in FIG. 23, the acquired prediction accuracy is a disabled prediction.

The value prediction management unit 2102b requests the sensor type prediction unit 2102d to perform the prediction of a value (M2309). Upon receipt of the request, the sensor type prediction unit 2102d acquires the read value hashed at the target address as a prediction value from the read value history unit 2102f (M2310). Furthermore, the sensor type prediction unit 2102d acquires the return value hashed at the target address as a prediction value from the return value history unit 2102h (M2311).

Upon completion of the access to the device (M2312), the hardware reader 2101b notifies the value prediction request reception unit 2102a of the completion of the access to the device (M2313). Upon receipt of the notification, the value prediction request reception unit 2102a requests the value prediction management unit 2102b to verify the result of the prediction (M2314).

The value prediction management unit 2012b requests the hardware reader 2101b to acquire the result of executing access to the device (M2315). Then, the value prediction management unit 2102b compares the prediction value with the result of executing access to the device, and requests the sensor type prediction unit 2102d to verify the result of the prediction (M2316).

Assume that as a result of the verification of the result of the prediction, the sensor type prediction unit 2102d judges that the prediction has failed because the prediction value does not match the result of executing access to the device. Otherwise, assume that the sensor type prediction unit 2102d judges that the number of times the prediction was successfully performed does not reach a specified number of times although the prediction value matches the result of executing access to the device and the prediction has been successfully performed.

In the results of judgment, the sensor type prediction unit 2102d acquires a target address from the hardware reader 2101b (M2317). Then, the sensor type prediction unit 2102d updates the read value and the prediction accuracy of the read value history unit 2102f hashed at the target address based on the request of verification on the result of prediction (M2318). The sensor type prediction unit 2102d updates the return value and the prediction accuracy of the return value history unit 2102h hashed at the target address based on the result of verification on the result of prediction (M2319).

The hardware reader 2101b requests the handler management unit 2103b to execute the post-processing of device access based on the result of executing access to a device (M2320). Upon receipt of the request, the handler management unit 2103b executes the handler for normal execution of performing the post-processing of device access based on the result of executing access to a device (M2321).

When the handler for normal execution is executed, the hardware reader 2101b receives a request to set a result of execution of post-processing of device access (M2322). The hardware reader 2101b sets result of executing post-processing of device access in a file, memory, etc. (M2123).

Described next is the sequence of the process in the information collection phase.

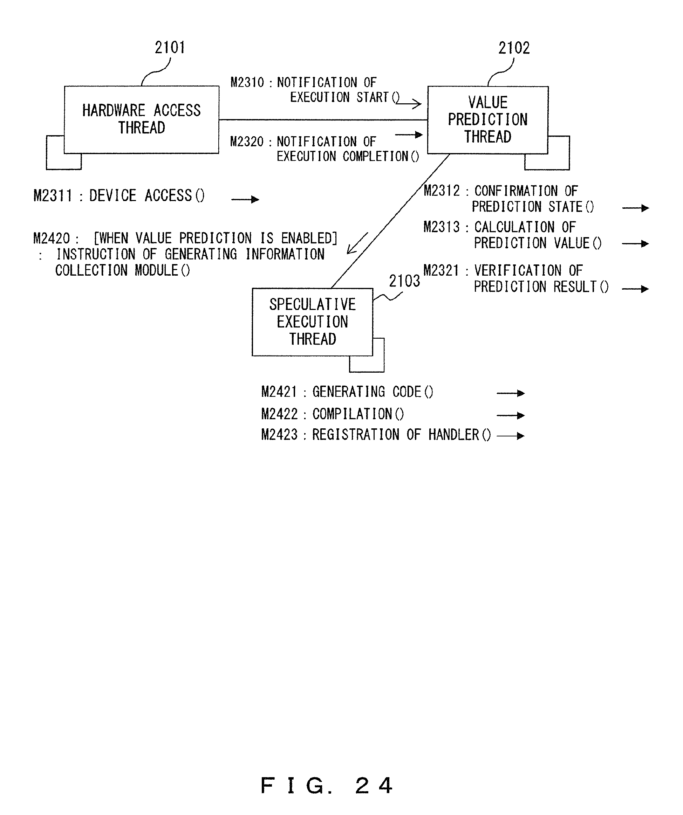

FIG. 24 illustrates the mutual operation between the threads in the information collection phase. To the same message in FIG. 24 as in FIG. 22, the same reference numeral is assigned.

As illustrated in FIG. 24, if it is judged that the prediction of the value on the result of executing access to the device has been successfully performed a specified number of times as a result of the verification of the result of the prediction in M2321, and the value may be predicted, then the value prediction phase is transferred to the information collection phase.

That is, in the information collection phase, an instruction to generate an information collection module in which necessary information is collected to optimize the handler for performing the post-processing after device access is issued from the value prediction thread 2102 to the speculative execution thread 2103 (M2420).

In the speculative execution thread 2103, a source code of a handler is generated with a prediction value embedded (M2421), the generated source code is optimized and compiled with an information collection option (M2422), and the compiled handler is registered with the cooperation of the value prediction thread 2102 (M2423). The registered information collecting handler is used in the next execution of the post-processing of device access.

If the information collecting handler is executed and the collection of information is completed, the optimized handler is generated by the similar operations in M2420 through M2423 illustrated in FIG. 24.

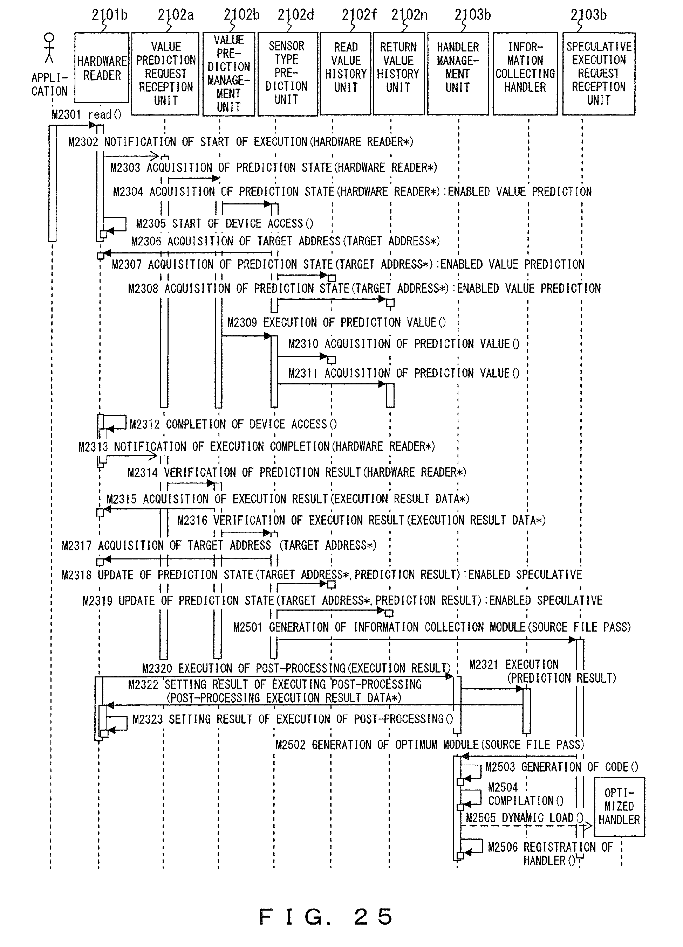

FIG. 25 illustrates the sequence of the process in the information collection phase. FIG. 25 illustrates an example of the hardware access processing on a sensor type device. To the same message in FIG. 25 as in FIG. 23, the same reference numeral is assigned.

As illustrated in FIG. 24, if the prediction of the value on the result of executing access to the device has been successfully performed a specified number of times, and it is judged that the value may be predicted, then the value prediction phase is transferred to the information collection phase.

If the access to the device which has been executed by the hardware reader 2101b after the transfer to the information collection phase is completed (M2312), then the sensor type prediction unit 2102d compares the prediction value with the result of executing access to the device, and the result of the prediction is verified (M2316).

As a result of the verification of the result of the prediction, assume that the sensor type prediction unit 2102d has judged that the prediction value matches the result of executing access to the device, and the number of times the prediction has been successfully performed has reached the specified number of times. In this case, the collection of the information to optimize the handler for performing the post-processing of device access has been completed, and the speculative execution of the post-processing of device access is enabled.

The sensor type prediction unit 2102d acquires a target address from the hardware reader 2101b (M2317). Then, the sensor type prediction unit 2102d updates the read value and the prediction accuracy of the read value history unit 2102f hashed at the target address, based on the result of the verification of the result of the prediction (M2318). In the case of the above-mentioned assumption, the prediction accuracy to be updated refers to enabled speculative execution.

Furthermore, the sensor type prediction unit 2102d updates the return value and the prediction accuracy of the return value history unit 2102h hashed at the target address, based on the result of the verification of the result of the prediction (M2319). In the case of the above-mentioned assumption, the prediction accuracy to be updated refers to enabled speculative execution.

The sensor type prediction unit 2102d instructs the speculative execution request reception unit 2103b to generate a optimized module of the post-processing of device access based on the result of the information collection (M2501).

On the other hand, the hardware reader 2101b requests the handler management unit 2103b to perform the post-processing of device access (M2320). Upon receipt of the request, the handler management unit 2103b executes the dynamically loaded information collecting handler (M2321).

When the post-processing of device access is performed by the handler 2103, the hardware reader 2101b receives a request to set the result of execution of the post-processing of device access (M2322). The hardware reader 210b sets the result of execution of the post-processing of device access in the file, the memory, etc. (M2123).

On the other hand, the speculative execution request reception unit 2103a requests the handler management unit 2103b to generate an optimized module (M2502).

The handler management unit 2103b generates a source code of the post-processing execution handler with the prediction value embedded (M2503), and compiles the generated source code (M2504). The compiled handler is dynamically loaded as an optimized handler (M2505).

The handler management unit 2103b registers the compiled handler (M2506).

Described finally is the sequence of the process in the speculative execution phase.

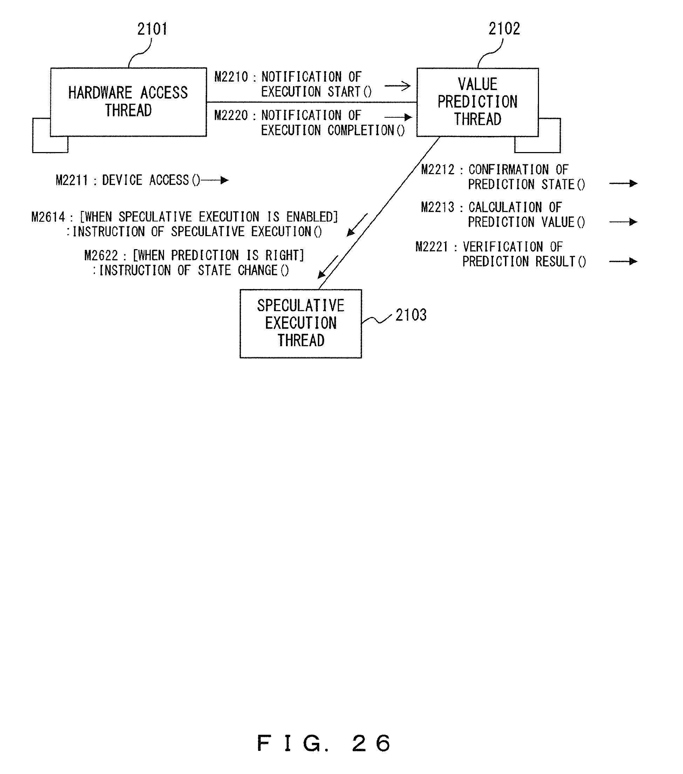

FIG. 26 illustrates the mutual operation between the threads in the speculative execution phase. To the same message in FIG. 26 as in FIG. 22, the same reference numeral is assigned.

The optimized handler generated in the information collection phase is used in the speculative execution of the post-processing of device access in the next execution of the hardware access processing.

As illustrated in FIG. 26, if enabled speculative execution is implied as a result of the confirmation (M2212) of the prediction accuracy in the value prediction thread 2102, the speculative execution of the post-processing of device access is instructed from the value prediction thread 2102 to the speculative execution thread 2103 (M2614).

The result of the execution of the post-processing of device access executed in the speculative execution thread 2103 is not immediately reflected on the files, the memory, etc., but is temporarily stored. Then, if it is judged that the prediction has been successfully performed as a result of the verification (M2221) of the result of the prediction in the value prediction thread 2102, the reflection of the state of the temporarily stored result of the execution of the post-processing of device access is instructed from the value prediction thread 2102 to the speculative execution thread 2103 (M2622).

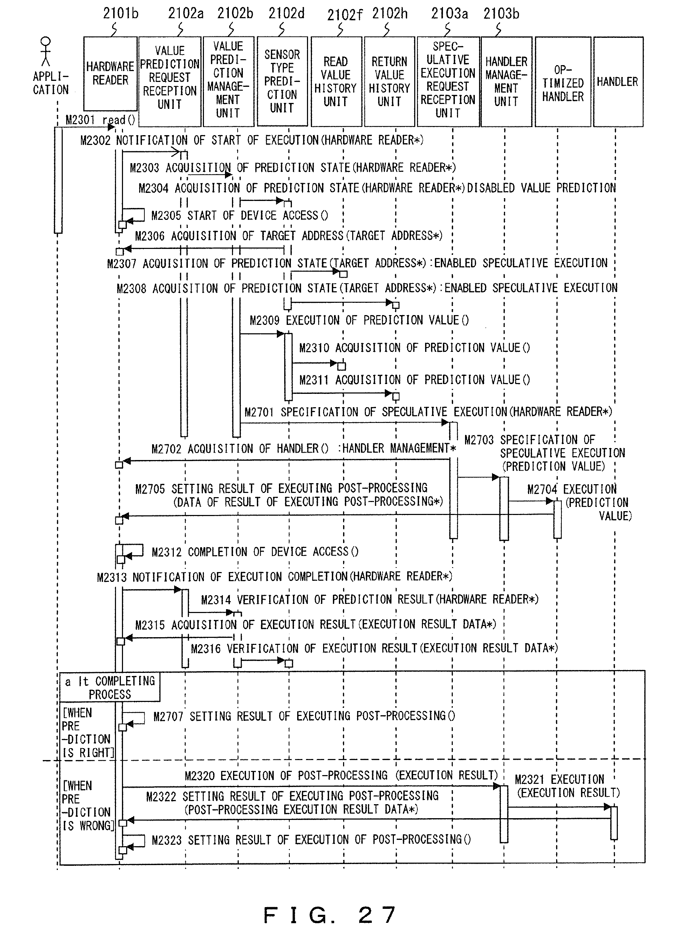

FIG. 27 illustrates the sequence of the process in the speculative execution phase. FIG. 27 illustrates an example of the hardware access processing on the sensor type device. To the same message in FIG. 27 as in FIG. 23, the same reference numeral is assigned.

As illustrated in FIG. 27, after the hardware reader 2101b starts accessing a device (M2305), the sensor type prediction unit 2102d acquires a target address as the address of the device to be accessed from the hardware reader 2101b (M2306).

The sensor type prediction unit 2102d acquires the prediction accuracy hashed at the target address from the read value history unit 2102f (M2307). Furthermore, the sensor type prediction unit 2102d acquires the prediction accuracy hashed at the target address from the return value history unit 2102h (M2308). In the example illustrated in FIG. 27, the prediction accuracy acquired from the read value history unit 2102f and the return value history unit 2102h refers to enabled speculative execution.

The value prediction management unit 2102b requests the sensor type prediction unit 2102d to predict a value (M2309). Upon receipt of the request, the sensor type prediction unit 2102d acquires the read value hashed at the target address as a prediction value from the read value history unit 2102f (M2310). In addition, the sensor type prediction unit 2102d acquires the return value hashed at the target address as a prediction value from the return value history unit 2102h (M2311).

If the prediction accuracy acquired by the sensor type prediction unit 2102d refers to enabled speculative execution, then the value prediction management unit 2102b instructs the speculative execution request reception unit 2103a to perform the speculative execution of the post-processing of device access (M2701).

The speculative execution request reception unit 2103a requests the hardware reader 2101b to acquire the pointer to the handler management unit 2103b (M2702). Then, the speculative execution request reception unit 2103a instructs the handler management unit 2103b to perform the speculative execution on the post-processing of device access based on the prediction value (M2703).

The handler management unit 2103b performs the speculative execution on the post-processing of device access using the optimized handler (M2704).

At the request to set the result of the execution of the speculatively executed post-processing of device access (M2705), the hardware reader 2101b temporarily stores the result of the execution of the post-processing of device access.

Upon completion of the access to the device (M2312), the hardware reader 2101b notifies the value prediction request reception unit 2102a of the completion of the access to the device (M2313). Upon receipt of the notification, the value prediction request reception unit 2102a requests the value prediction management unit 2103 to verify the result of the prediction (M2314).

The value prediction management unit 2103 requests the hardware reader 2101b to acquire the result of executing access to the device (M2315). Then, the value prediction management unit 2103 compares the prediction value with the result of executing access to the device, and requests the sensor type prediction unit 2102d to verify the result of the prediction (M2316).

Assume that the sensor type prediction unit 2102d has judged that the prediction value matches the result of executing access to the device and the prediction has been successfully performed. In this case, the hardware reader 2101b reflects the state of the temporarily stored result of the execution of the post-processing of device access on the files, the memory, etc. (M2707).

On the other hand, assume that the sensor type prediction unit 2102d has judged that the prediction value does not match the result of executing access to the device and the prediction has failed. In this case, the hardware reader 2101b requests the handler management unit 2103 to perform the post-processing of device access based on the result of executing access to the device (M2320). Upon receipt of the request, the handler management unit 2103b performs the post-processing of device access by the normal execution handler (M2321). Upon receipt of the request to set a result of the execution of the post-processing of device access (M2322), the hardware reader 2101b discards the temporarily stored result of the speculative execution of the device access. Then, hardware reader 2101b sets the result of execution of the post-processing of device access in the file, the memory, etc. (M2123).

Thus, according to the embodiment of the present invention, when the prediction of a value is successfully performed on the result of executing access to a device, the access to the device and the post-processing of device access are speculatively executed in parallel. Therefore, the execution time of the hardware access processing may be reduced.

Furthermore, according to the embodiment of the present invention, the result of the speculative execution of the post-processing of device access is reflected on the memory, the files, etc. after the verification of the result of prediction. Therefore, it is unnecessary to perform recovery processing when the prediction of a value fails, thereby reducing the overhead.

### Descriptions of reference numerals

- 100: electronic device
- 101: CPU
- 102: memory
- 103: I2C controller
- 104a, 104b, 104c: I2C devices
- 601: hardware access processing unit
- 602: value prediction processing unit
- 602a: sensor type value prediction processing unit
- 602b: storage element type value prediction processing unit
- 603: function management unit
- 604: value constant conversion code generation processing unit
- 605: compiler
- 606: output data pending processing unit
- 2101: hardware access thread
- 2101a: hardware accessor
- 2101b: hardware reader
- 2101c: hardware writer
- 2102: value prediction thread
- 2102a: value prediction request reception unit
- 2102b: value prediction management unit
- 2102c: prediction policy unit
- 2102d: sensor type prediction unit
- 2102e: storage element type prediction unit
- 2102f: read value history unit
- 2102g: write value history unit
- 2102h: return value history unit
- 2103: speculative execution thread
- 2103a: speculative execution request reception unit
- 2103b: handler management unit
- 2103c: handler

## Claims

1. An electronic device, comprising:
a device (104a-104c) connected to a bus controller;
a memory (102) that stores a program; and
a processing unit (101) that executes access to the device through the bus controller according to the program, wherein
the processing unit
generates a prediction value of executing access to the device based on the result of executing access in the past in parallel with the access to the device, and
executes, prior to completing access to the device, using the prediction value of the execution of the access to the device, post-processing of the access to the device using the result of executing access to the device when a number of times which the result of executing access in the past matches a prediction value of execution of access in the past reaches a specified number of times.

2. The electronic device according to claim 1, wherein
the processing unit generates a prediction value of execution of access to the device according to a prediction policy for each device type to which the device belongs.

3. The electronic device according to claim 1 or 2, wherein the processing unit
temporarily holds a result of execution of post-processing of access to the device performed prior to completing access to the device,
compares the result of executing access to the device with a prediction value of execution of access to the device after completing access to the device, and
reflects a state based on the result of execution of the post-processing of access to the device performed prior to completing access to the device when the result of executing access to the device matches the prediction value of execution of access to the device.

4. The electronic device according to any of claims 1 through 3, wherein
when the number of times of matching exceeds a specified number of times, the processing unit collects information for optimizing the post-processing of access to the device performed prior to completing access to the device.

5. A device access method executed by a processing unit of an electronic device, the device access method comprising:
generating a prediction value of a result of executing access to a device connected to a bus controller, based on the result of executing access to the device once or more in the past, in parallel with the access to the device; and
executing, prior to completing access to the device, using the prediction value of the result of executing access to the device, post-processing of the access to the device using the result of executing access to the device when a number of times which the result of executing access once or more in the past matches a prediction value of the result of executing access once or more in the past reaches a specified number of times.

6. A program used to direct a processing unit of an electronic device to perform processes, the program comprising:
generating a prediction value of a result of executing access to a device connected to a bus controller, based on the result of executing access to the device once or more in the past, in parallel with the access to the device; and
executing, prior to completing access to the device, using the prediction value of the result of executing access to the device, post-processing of the access to the device using the result of executing access to the device, when a number of times which the result of executing access once or more in the past matches a prediction value of the result of executing access once or more in the past reaches a specified number of times.
